# EUROPEAN PATENT APPLICATION

(11) **EP 2 685 364 A1**
(43) Date of publication of application: **15.01.2014**
(21) Application number: 13175363.4
(22) Date of filing: 05.07.2013
(51) Int. Cl.: G06F 3/0484

(54) **Method and apparatus for providing clipboard function in mobile device**

(30) Priority: 09.07.2012 KR 20120074415
(71) Applicant: Samsung Electronics Co., Ltd, Gyeonggi-do 443-742 (KR)
(72) Inventor: Jang, Si-Hak, Gyeonggi-do 443-742 (KR); Park, Mi-Jung, Gyeonggi-do 443-742 (KR)
(74) Representative: Birchenough, Lewis

(57) **Abstract**

A method and an apparatus for providing a clipboard function in a mobile device. The method includes: detecting whether a clipboard mode entry event for entering a clipboard mode has occurred; searching for at least one object capable of being clipped on a touch screen displaying a screen of the mobile device, when the clipboard mode entry event has occurred; and displaying at least one clip identifier matched with the at least one found object on the touch screen of the mobile device.

## Description

### BACKGROUND OF THE INVENTION

### 1. Field of the Invention

The present invention relates to the temporary editing and storing of data in an electronic device. More particularly, the present invention relates to a technology for providing a clipboard function in a mobile device.

### 2. Description of the Related Art

These days, with the rapid development of the technology of mobile devices, a mobile device enables the use of data, such as texts, images, sound files and image files of various kinds. However, it is a commonly occurring scenario in which a user finds that it is necessary to edit or temporarily store the data being used. Accordingly, there is a long-felt need in the art for a mobile device to have a clipboard function as in the case of a desktop computer.

The term "clipboard function" refers to a function capable of first storing data (for example, data of at least one of text, an image, a sound file, and an image file) displayed on a screen in a storage unit and subsequently copying or pasting the data into an input area.

However, a mobile device operates differently from a desktop computer, has a smaller screen than that of the desktop computer, and there is much difficulty in performing a minute input without the aid of a pointing device as is often used in a desktop computer to click and copy data such as images, texts and files, etc. onto a clipboard. Accordingly, in providing a clipboard function, it is necessary to provide a clipboard function according to the characteristics of the mobile device.

### SUMMARY OF THE INVENTION

Accordingly, an exemplary aspect of the present invention is in part to solve at least some of the above-mentioned problems, and to provide a method for providing a clipboard function in a mobile device through which a user easily performs a clip.

Also, another exemplary aspect of the present invention is to provide a list view where a clipped object can be easily identified.

In accordance with an exemplary aspect of the present invention, a method for providing a clipboard function in a mobile device is provided. The method includes: detecting whether a clipboard mode entry event for entering a clipboard mode has occurred; searching for at least one object that can be clipped on a touch screen displaying a screen of the mobile device, when the clipboard mode entry event has occurred; and displaying at least one clip identifier matched with the at least one found object on the touch screen of the mobile device.

In accordance with another exemplary aspect of the present invention, a mobile device having a clipboard function is provided. The mobile device includes: a touch screen for displaying a screen of the mobile device; and a control unit for detecting whether a clipboard mode entry event for entering a clipboard mode has occurred, searching for at least one object that can be clipped on the touch screen displaying the screen of the mobile device when the clipboard mode entry event has occurred, and displaying at least one clip identifier matched with the at least one found object on the touch screen of the mobile device.

### BRIEF DESCRIPTION OF THE DRAWINGS

The above and other exemplary features, aspects, and advantages of the present invention will become more apparent to a person of ordinary skill in the art from the following detailed description taken in conjunction with the accompanying drawings, in which:
FIG. 1 is a block diagram schematically showing the configuration of a mobile device according to an exemplary embodiment of the present invention;
FIG. 2 is a front view of a mobile device according to an exemplary embodiment of the present invention;
FIG. 3 is a flowchart showing a method for providing a clipboard function in a mobile device according to an exemplary embodiment of the present invention;
FIG. 4 is a view illustrating a method for providing a clipboard function in a mobile device according to an exemplary embodiment of the present invention;
FIG. 5 is a flowchart showing a method for providing a clipboard function in a mobile device according to another exemplary embodiment of the present invention;
FIG. 6 is a view illustrating a method for providing a clipboard function in a mobile device according to another exemplary embodiment of the present invention;
FIG. 7 is a view illustrating a process for reducing an object to be clipped in a method for providing a clipboard function in a mobile device according to another exemplary embodiment of the present invention;
FIG. 8 is a view illustrating a process for enlarging an object to be clipped in a method for providing a clipboard function in a mobile device according to another exemplary embodiment of the present invention;
FIG. 9 is a view illustrating a process for freely editing an object to be clipped in a method for providing a clipboard function in a mobile device according to another exemplary embodiment of the present invention;
FIG. 10 is a flowchart showing a method for providing a clipboard function in a mobile device according to still another exemplary embodiment of the present invention;
FIG. 11 is a view illustrating the activation of a clipboard list view in a method for providing a clipboard function in a mobile device according to still another exemplary embodiment of the present invention;
FIG. 12 is a view illustrating the display of a clipboard list view on a screen of the mobile device in a method for providing a clipboard function in a mobile device according to still another exemplary embodiment of the present invention;
FIG. 13 is a view illustrating the display of a search bar on a clipboard list view screen of the present invention;
FIG. 14 is a view illustrating the display of a sorting bar on a clipboard list view screen of the present invention;
FIG. 15 is a view illustrating the display of a brief list view of a clipboard on a clipboard list view screen of the present invention;
FIG. 16 is a view illustrating the display of an additional information icon on a clipboard list view screen of the present invention;
FIG. 17 is a view illustrating the display of an original icon on a clipboard list view screen of the present invention;
FIG. 18 is a view illustrating the use of additional information on a clipboard list view screen of the present invention;
FIG. 19 to FIG. 21 are views each illustrating the display of send icons on a clipboard list view screen of the present invention;
FIG. 22 is a view illustrating an editing process on a clipboard list view screen of the present invention;
FIG. 23 is a flowchart showing a method for providing a clipboard function in a mobile device according to yet another exemplary embodiment of the present invention;
FIG. 24 is a view illustrating performing of a copy operation or a paste operation on a screen in a method for providing a clipboard function in a mobile device according to yet another exemplary embodiment of the present invention; and
FIG. 25 to FIG. 31 are views illustrating a method for providing a clipboard function in a mobile device according to yet another exemplary embodiment of the present invention.

### DETAILED DESCRIPTION

Hereinafter, exemplary embodiments of the present invention will be described with reference to the accompanying drawings. However, the presently claimed invention is not limited or restricted by illustrative embodiments. Throughout the accompanying drawings, identical reference numerals denote elements which all perform a substantially identical function.

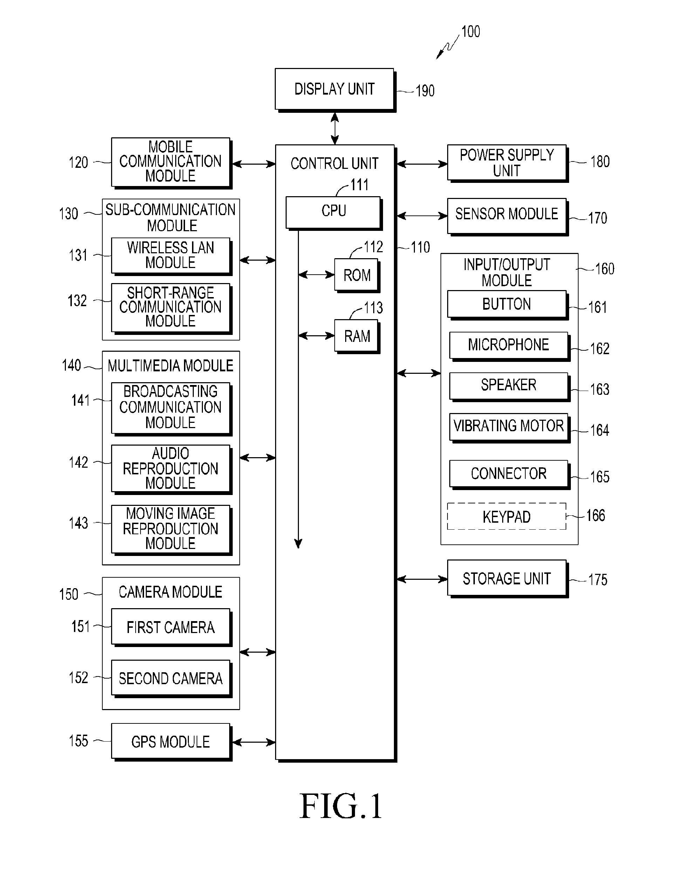

FIG. 1 is a block diagram schematically showing the configuration of a mobile device according to an exemplary embodiment of the present invention.

Referring now to FIG. 1, a mobile device 100 may be connected to an external device (not shown) by using a mobile communication module 120, a sub-communication module 130 and a connector 165. External devices include but are not limited to another device (not shown), a mobile phone (not shown), a smart phone (not shown), a tablet PC (not shown), and a server (not shown).

Referring now to FIG. 1, the mobile device 100 as shown preferably includes a control unit 110, a mobile communication module 120, a sub-communication module 130, a multimedia module 140, a camera module 150, a GPS (Global Positioning System) module 155, an input/output module 160, a sensor module 170, a storage unit 175, a power supply unit 180, and a display unit 190. The sub-communication module 130 preferably includes at least one of a wireless LAN (Local Area Network) module 131 and a short-range communication module 132. The multimedia module 140 preferably includes at least one of a broadcasting communication module 141, an audio reproduction module 142 and a moving image reproduction module 143. The camera module 150 preferably includes at least one of a first camera 151 and a second camera 152. The input/output module 160 preferably includes at least one of a button 161, a microphone 162, a speaker 163, a vibration motor 164, a connector 165 and a keypad 166.

The control unit 110 may include a CPU (Central Processing Unit) 111, a ROM (Read-Only Memory) 112, which stores a control program for controlling the mobile device 100, and a RAM (Random Access Memory) 113, which stores a signal or data which is input from outside the mobile device 100, or which is used as a memory area for a task performed by the mobile device 100. The CPU 111 may include a single core, dual cores, triple cores, or quad cores. The CPU 111, the ROM 112 and the RAM 113 may be connected to each other through an internal bus.

The control unit 110, which comprises hardware such a processor or microprocessor, may control the mobile communication module 120, the sub-communication module 130, the multimedia module 140, the camera module 150, the GPS module 155, the input/output module 160, the sensor module 170, the storage unit 175, the power supply unit 180, and the display unit 190. Also, the control unit 110 which controls an overall operation of the mobile device having a clipboard function, may perform a control operation so as to cause the mobile device to enter a clipboard mode by detecting an event occurring on the mobile device, may perform a control operation so as to search for at least one object which may be clipped on a screen of the mobile device, may perform a control operation in order to display at least one clip identifier matched with the at least one found object on a touch screen of the mobile device, and may perform a control operation in order to detect a touch of the clip identifier and store at least one object matched with the at least one touched clip identifier in a clipboard storage area included in a storage unit.

Under the control of the control unit 110, the mobile communication module 120 causes the mobile device 100 to be connected to an external device via at least one antenna or multiple antennas (not shown) through mobile communication. The mobile communication module 120 transmits/receives a wireless signal for a voice phone call, a video phone call, a Short Message Service (SMS), or a Multimedia Messaging Service (MMS) to/from a mobile phone, a smart phone, a tablet PC, or other communication devices, having a telephone number which is input to the mobile device 100.

The sub-communication module 130 may include at least one of the wireless LAN module 131 and the short-range communication module 132. For example, the sub-communication module 130 may include only the wireless LAN module 131, or may include only the short-range communication module 132, or may include both the wireless LAN module 131 and the short-range communication module 132.

The control unit 110 controls connection of the wireless LAN module 131 to the Internet where a wireless Access Point (AP) is installed. The wireless LAN module 131 supports Wireless Local Area Network (WLAN) standards (IEEE 802.11x) of the Institute of Electrical and Electronics Engineers (IEEE). Under the control of the control unit 110, the short-range communication module 132 enables the mobile device 100 to wirelessly perform short-range communication with an image-forming device. Short-range communication schemes may include Bluetooth, Infrared Data Association (IrDA), etc.

The mobile device 100 may preferably include at least one of the mobile communication module 120, the wireless LAN module 131, and the short-range communication module 132, according to the performance thereof. For example, the mobile device 100 may include a combination of the mobile communication module 120, the wireless LAN module 131 and the short-range communication module 132, according to the performance thereof. Each of the communication modules 120, 131 and 132 included in the mobile device may transmit via hardware such as a transmitter or hardware interface at least one object stored in a clipboard storage area to a cloud server, and may also receive at least one object from the cloud server.

The multimedia module 140 may include the broadcasting communication module 141, the audio reproduction module 142, or the moving image reproduction module 143. According to the control of the control unit 110, the broadcasting communication module 141 includes hardware such as a transceiver, for example a receiver to receive a broadcast signal (for example, a TV broadcast signal, a radio broadcast signal, or a data broadcast signal) and transmitter to broadcast additional information (for example, Electric Program Guide (EPS) or Electric Service Guide (ESG)), which are transmitted from a broadcasting station, through a broadcasting communication antenna (not shown). According to the control of the control unit 110, the audio reproduction module 142 typically includes a codec and reproduce a stored or received digital audio file (for example, a file having a file extension, such as mp3, wma, ogg, or wav). According to the control of the control unit 110, the moving image reproduction module 143 may reproduce a stored or received digital moving image file (for example, a file having a file extension, such as mpeg, mpg, mp4, avi, mov, or mkv). The moving image reproduction module 143 may reproduce a digital audio file.

The multimedia module 140 may include the audio reproduction module 142 and the moving image reproduction module 143, as well as the broadcasting communication module 141. Also, the audio reproduction module 142 or the moving image reproduction module 143 of the multimedia module 140 may be included in the control unit 110.

According to the control of the control unit 110, the camera module 150 may include least one of the first camera 151 and the second camera 152, which captures a still image or a moving image. Also, the first camera 151 or the second camera 152 may include an auxiliary light source (for example, a flash (not shown)) for providing the amount of light required to capture an image. The first camera 151 may be disposed on a front surface of the mobile device 100, and the second camera 152 may be disposed on a rear surface of the mobile device 100. Otherwise, the first camera 151 and the second camera 152 may be closely disposed (for example, a distance between the first camera 151 and the second camera 152 is greater than 1 cm and is less than 8 cm), and may capture a three-dimensional still image or a three-dimensional moving image.

The GPS module 155 may receive a radio wave from each of multiple GPS satellites (not shown) in the Earth's orbit, and may calculate a location of the mobile device 100 by using a Time of Arrival (TOA) from a GPS satellite (not shown) to the mobile device 100. The location of the mobile device 100 calculated by the GPS module 155 may be expressed by, for example, at least one of a latitude, a longitude, a height, and a three-dimensional orientation.

The input/output module 160 may include at least one of the multiple buttons 161, the microphone 162, the speaker 163, the vibration motor 164, the connector 165, and the keypad 166.

The button 161 may be disposed on a front surface, on lateral surfaces, or on a rear surface of a housing of the mobile device 100, and may include at least one of a power/lock button, a volume button, a menu button, a home button, and a back button.

According to the control of the control unit 110, the microphone 162 receives a voice or sound as input, and generates an electrical signal in response.

According to the control of the control unit 110, the speaker 163 may output to the outside of the mobile device 100, a sound associated with each of various signals (for example, a wireless signal, a broadcast signal, a digital audio file, a digital moving image file, and capturing of an image) from any of the mobile communication module 120, the sub-communication module 130, the multimedia module 140, and the camera module 150. The speaker 163 may output a sound (for example, a button operation sound or a ring-back tone, which is associated with a phone call) associated with a function performed by the mobile device 100. One or more speakers 163 may be mounted at one or more suitable positions of the housing of the mobile device 100.

According to the control of the control unit 110, the vibration motor 164 may convert an electrical signal to a mechanical vibration. The vibration motor might constitute a piezoelectric or electro-restrictive element. For example, when the mobile device 100 in a vibration mode receives a voice phone call from another device (not shown), the vibration motor 164 operates. One or more vibration motors 164 may be mounted within the housing of the mobile device 100. The vibration motor 164 may operate in response to a user's touch gesture on the screen of the display unit 190 and a continuous movement of a touch on the screen of the display unit 190.

With continued reference to FIG. 1, the connector 165 may be used as an interface for connecting the mobile device 100 to an external device (not shown) or a power source (not shown). According to the control of the control unit 110, data stored in the storage unit 175 of the mobile device 100 may be transmitted to the external device (not shown) through a wired cable connected to the connector 165. In contrast, data may be received from the external device (not shown) through the wired cable connected to the connector 165. Power may be input from the power source (not shown) through the wired cable connected to the connector 165. In contrast, a battery (not shown) may be charged through the wired cable connected to the connector 165.

The keypad 166 may receive a key input from a user in order to control the mobile device 100. The keypad 166 includes a physical keypad (not shown) mounted on the housing of the mobile device 100 or a virtual keypad (not shown) displayed on the screen of the display unit 190. The physical keypad (not shown) mounted on the housing of the mobile device 100 may be excluded according to the performance or structure of the mobile device 100.

The sensor module 170 includes at least one sensor for detecting the state of the mobile device 100. For example, the sensor module 170 may include a proximity sensor for detecting whether the user accesses the mobile device 100, an illuminance sensor (not shown) for detecting the amount of light around the mobile device 100, and a motion sensor (not shown) for detecting motion (for example, rotation of the mobile device 100, acceleration or vibration applied to the mobile device 100) of the mobile device 100. The at least one sensor may detect the state of the mobile device 100, may generate a signal responsive to the detection, and may transmit the generated signal to the control unit 110. Sensors may be added to or excluded from the sensor module 170, according to the performance of the mobile device 100.

According to the control of the control unit 110, the storage unit 175, which is a non-transitory machine readable medium, may store a signal or data, which is input/output in response to the operation of each of the mobile communication module 120, the sub-communication module 130, the multimedia module 140, the camera module 150, the GPS module 155, the input/output module 160, the sensor module 170, and the display unit 190. The storage unit 175 may store control programs and applications that are used to control the mobile device 100 or which are used for control by the control unit 110. The storage unit 175 may include a clipboard storage area. The clipboard storage area may signify an area for storing at least one clipped object.

The term "storage unit" includes, for example, the storage unit 175, as well as ROM 112 and a RAM 113 within the control unit 110, and memory cards (not shown) (for example, an SD card and a memory stick) mounted in the mobile device 100. The storage unit may include a non-volatile memory, a volatile memory, and a Hard Disk Drive (HDD) or a Solid State Drive (SSD).

According to the control of the control unit 110, the power supply unit 180 supplies power directly to the control unit, or may provide power to one or more storage devices, such as batteries mounted in the housing of the mobile device 100. The one or more batteries provide power to the mobile device 100. The claimed invention does not preclude the use of solar cell technology in addition to or in lieu of batteries. Also, the power supply unit 180 may provide power, which is input from an external power source (not shown), to the mobile device 100 through a wired cable connected to the connector 165.

According to the control of the control unit 110, the display unit 190 may display an image provided by the mobile device on the screen of the display unit 190. The display unit 190 may include a touch screen. The touch screen may provide a user interface for various services (for example, a phone call, data transmission, broadcasting, and capturing of an image), to the user. The touch screen may transmit an analog signal responsive to at least one touch which is input to the user interface, to the control unit 110. The touch screen may receive, as input, at least one touch through the user's body (for example, fingers including a thumb) or an input means enabling a touch input (for example, stylus pen). Also, the touch screen may receive, as input, a continuous movement of touch among one or more touches. The touch screen may transmit an analog signal responsive to a continuous movement of an input touch, to the control unit 110.

In the present invention, a touch is not limited to a contact between the touch screen and the user's body or the input means enabling a touch input, but may include a non-contact (for example, a distance which may be detected between the touch screen and the user's body or the input means enabling a touch input, is equal to or less than a predetermined distance) that is defined as the presence of the user's body or input means within a detectable predetermined range of the touch screen. A distance which may be detected by the touch screen, may be changed according to the performance or structure of the mobile device 100. The touch screen, for example, may be implemented by a resistive touch screen, a capacitive touch screen, an infrared-type touch screen, or an acoustic wave-type touch screen. One can, for example, wave their hand in front of the touch screen within this detectable range that is detected by sensors of the touch screen and determined to be an input.

The control unit 110 may convert an analog signal received from the touch screen to a digital signal (for example, X and Y coordinates). The control unit 110 may control the display unit 190 by using the digital signal. For example, the control unit 110 may cause a shortcut icon displayed on the display unit 190 to be selected or executed, in response to a touch.

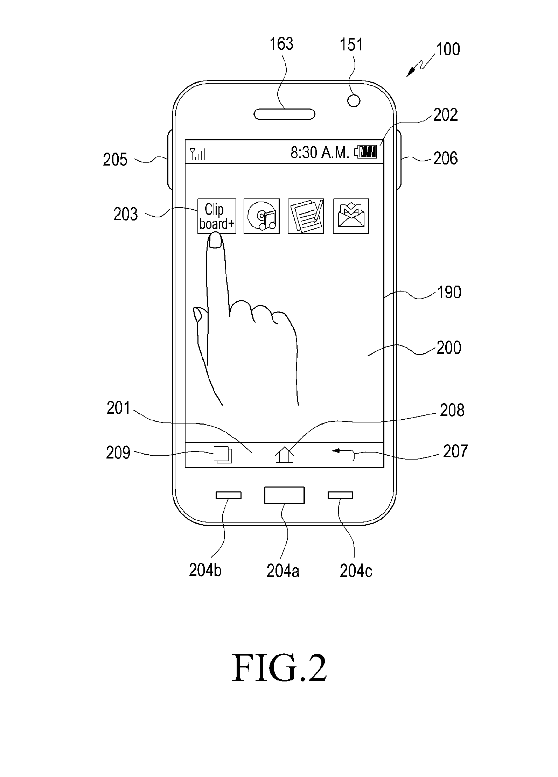

FIG. 2 is a front view of a mobile device according to an exemplary embodiment of the present invention.

Referring now to FIG. 2, the display unit 190 is disposed at the center of the front surface of the mobile device 100. The display unit 190 may include a touch screen. The touch screen is largely constructed such that the touch screen occupies a large part of the front surface of the mobile device 100, and in an exemplary embodiment, can even occupy virtually all of the front surface except for some sensors, or an opening in communication with one or more sensors. The first camera 151 and the illuminance sensor may be disposed at an edge of the front surface of the mobile device 100. On the lateral surfaces of the mobile device 100, for example, a power/reset button 206, a volume button 205, the speaker 163, a terrestrial DMB (Digital Multimedia Broadcasting) antenna for the reception of broadcasting, a microphone and a connector may be disposed. An artisan should understand and appreciate that the claimed invention is not limited to such as arrangement.

On the rear surface of the mobile device 100, the second camera may be disposed. At a lower end of the mobile device 100 along the front surface, multiple buttons may be disposed. For example, a home screen shift button 204a displays a home screen on a main screen 200. Namely, when the home screen shift button 204a is touched while applications are executed on the main screen 200, the home screen as shown in FIG. 2 is displayed on the main screen 200. A "back" button 204c is used to display a screen displayed just before a currently-displayed screen, or is used to quit the most recently-used application. Also, a menu button 204b is used to bring up a menu of the currently-displayed screen or a menu of an application being executed. These buttons may be physical or virtual.

With continued reference to FIG. 2, the display unit 190 preferably includes the main screen 200, a bottom bar 201, and a top bar 202. The main screen 200 corresponds to an area in which a display of one or more applications being executed and display output of including but not limited in any way to content, messages, status, etc,, in accordance with the application and operating system of the mobile device.

FIG. 2 shows an example of displaying the home screen on the display unit 190, which can be a changeable default. The home screen may be a first screen displayed on the display unit 190 when the mobile device 100 is powered on booted, as it is possible that a screen showing status, or for example, a manufacturer Logo, may initially appear during the powering on process. Moreover, the first screen might indicate the screen is locked and provide a prompt for a password, gesture, etc.

On the home screen, execution keys 203 for executing multiple applications stored in the mobile device 100 are first aligned in rows and columns, and are then displayed. The execution keys 203 may be implemented as icons, buttons, texts, or the like.

When an execution key among the execution keys 203 is touched, an application matched with the touched execution key is executed, and a result of executing the application is displayed on the main screen 200.

As still shown in FIG. 2, the bottom bar 201 is in this particular example elongated in a horizontal direction at a lower end of the display unit 190, and includes standard function icons 207, 208 and 209. The position and orientation can be a user-changeable display. A home screen shift icon 208 can be used to display the home screen on the main screen 200. For example, when the home screen shift icon 208 is touched while applications are executed on the main screen 200, the home screen as shown in FIG. 2 is displayed on the main screen 200. A back icon 207 is used to display a screen displayed just before a currently-displayed screen, or is used to quit the most recently-used application. In addition, a menu icon 209 is used to bring up a menu of the currently-displayed screen or a menu of an application being executed.

Also with continued reference to FIG. 2, at an upper end of the display unit 190, the top bar 202 which displays states of the mobile device 100, such as the state of battery charging, the strength of a received signal and current time, may be displayed.

Meanwhile, the bottom bar 201 and the top bar 202 may not be displayed on the display unit 190, according to an Operating System (OS) of the mobile device 100 or according to an application executed on the mobile device 100. When both the bottom bar 201 and the top bar 202 are not displayed on the display unit 190, the main screen 200 may be formed over the entire area of the display unit 190. Also, the bottom bar 201 and the top bar 202 may be displayed such that the bottom bar 201 and the top bar 202 overlap the main screen 200 in a translucent state.

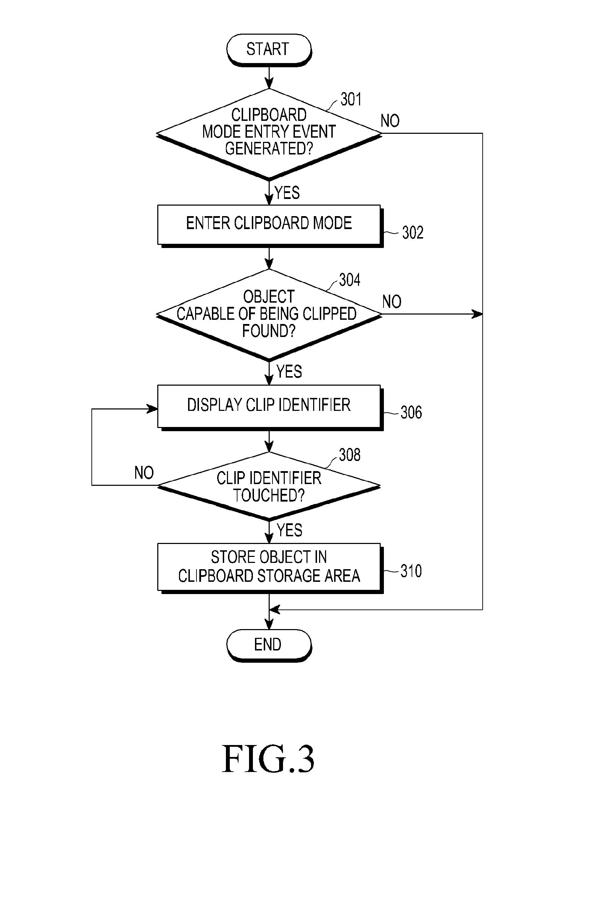

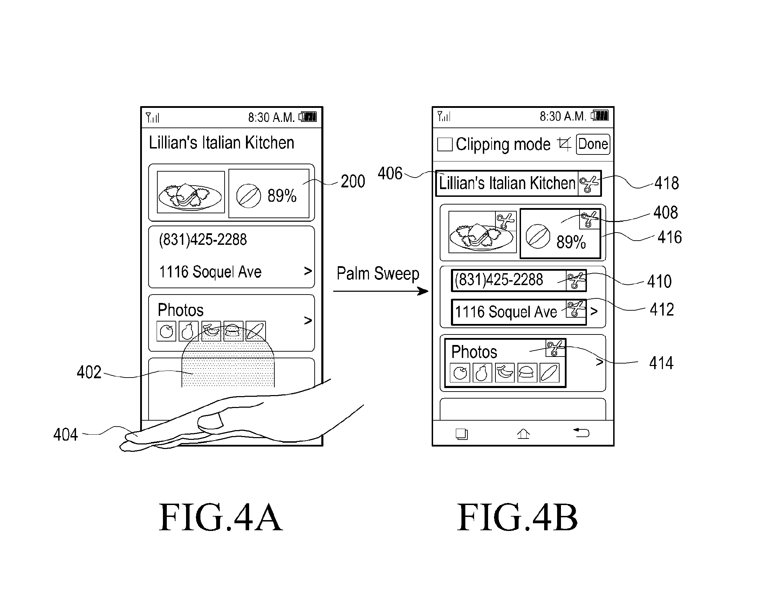

FIG. 3 is a flowchart showing an exemplary operational flow of a method for providing a clipboard function in a mobile device according to an exemplary embodiment of the present invention. Also, FIG. 4 is a view illustrating a method for providing a clipboard function in a mobile device according to an exemplary embodiment of the present invention according to the flowchart of FIG. 3.

With reference to FIG. 3 and FIG. 4, a method for providing a clipboard function in a mobile device according to an exemplary embodiment of the present invention will be described below.

First, at step 301 of detecting whether a clipboard mode entry event has occurred, the control unit 110 of the mobile device 100 detects whether or not a clipboard mode entry event for entering a clipboard mode has occurred. Namely, the control unit 110 detects the clipboard mode entry event for entering the clipboard mode for providing a clipboard function.

Then, at step 302 of entering the clipboard mode, when the clipboard mode entry event has occurred, the control unit 110 causes the mobile device 100 to enter the clipboard mode. At this time, the clipboard mode signifies a mode for providing the clipboard function on the main screen 200 of the mobile device 100. Accordingly, when the control unit 110 causes the mobile device 100 to enter the clipboard mode, a user may use the clipboard function. Herein, the term "clipboard function" refers to a function capable of first storing data (for example, data of at least one of text, an image, a moving image file, and a sound file) displayed on a screen in a storage unit and subsequently copying or pasting the data into an input area.

At this time, the clipboard mode entry event for entering the clipboard mode may signify the user's gesture. The user's gesture signifies at least one of a palm sweep, a touch or a long press or multiple touches on a screen or a combination of them, a touch or a long press or multiple touches of a particular icon or a combination of them, a touch or a long press or multiple touches of a icon or a button located in the top bar 202 or the bottom bar 201 or a combination of them, receiving an input through each of buttons (for example, reference numerals 204a, 204b, 204c, 205 and 206 in FIG. 2) disposed on the surface of the mobile device 100, receiving a voice as input, and receiving a sensing signal as input through the sensor module 170.

FIG. 4 shows a process for detecting whether a clipboard mode entry event for entering a clipboard mode has occurred and causing the mobile device to enter the clipboard mode. In FIG. 4(a), the clipboard mode entry event for entering the clipboard mode is represented, for example, as a palm sweep 402. When a user 404 sweeps the screen 200 including a touch screen with the user's palm in order to cause the mobile device to enter the clipboard mode, the control unit 110 for controlling the touch screen of the mobile device performs a control operation so as to sense the palm sweep corresponding to the clipboard mode entry event, and so as to cause the mobile device to enter the clipboard mode. At this time, the entered clipboard mode is shown in FIG. 4(b). Accordingly, according to an exemplary embodiment of the present invention, there is an advantage of providing the clipboard mode in which the user's gesture may be sensed and the sensed user's gesture may be used in the mobile device.

Then, at step 304 of searching for an object which may be clipped, the control unit 110 searches for at least one object, which may be clipped, on the touch screen of the mobile device. Namely, the control unit 110 searches for at least one object, which may be stored in the clipboard storage area, by using screen data displayed on the touch screen. At this time, in order to search for an object which may be clipped, the control unit uses HTML (Hyper Text Markup Language) information on screen data. Namely, the control unit 110 may search for an object including at least one of text, an image, a moving image file and a sound file, which may be clipped, by using the HTML information on screen data. FIG. 4(b) shows an example where the at least one object which may be clipped, is found as text 406, text 408 combined with an image, text 410 including a telephone number, text 412 including an address, and an image 414. Accordingly, according to an exemplary embodiment of the present invention, there is an advantage in that user does not have to search for an object which may be clipped. Namely, in the case of the mobile device, unlike a desktop computer, a touch screen in the mobile device that receives an input has a much smaller size than that of the desktop computer. Accordingly, when a clipboard function is intended to be used, there is a disadvantage in that the user's control is inconvenient. Therefore, according to the method and the apparatus for providing the clipboard function in the mobile device according to an exemplary embodiment of the present invention, an automatic search is made for an object, which may be clipped, and the found object is displayed on the touch screen. Accordingly, there is an advantage in that the user does not have to search for the object, which may be clipped, and does not have to perform a relevant input operation.

With continued references to the flowchart in Fig. 3, at step 306 a clip identifier is displayed, and the control unit 110 controls the touch screen 200 of the mobile device so as to display at least one clip identifier matched with the at least one found object on the touch screen 200 thereof. At this time, the clip identifier may be an underline drawn at a lower end of the object, or may be a guide line surrounding the object, or may be an icon located near the object. FIG. 4(b) shows an example of displaying at least one clip identifier matched with the object as a guide line 416 surrounding the object and an icon 418 located near the object. Therefore, according to an exemplary embodiment of the present invention, there is an advantage in that an identifier is automatically displayed for an object, which may be clipped, and the user can see the object, which may be clipped, at a glance.

Then, at step 308 of detecting whether there has been a touch of a clip identifier, the control unit 110 determines whether at least one clip identifier has been touched. Namely, in order to first receive the selection of a clip identifier matched with an object, which may be clipped, and then store the object in the clipboard storage area, the control unit 110 detects whether a touch of the clip identifier has occurred. At this time, the touch may be one touch, a long press, or multiple touches, substantially simultaneously or in sequence. Accordingly, according to an exemplary embodiment of the present invention, there is an advantage in that the user can clip an object desired by the user only by touching the screen.

Then, at step 310 the object in the clipboard storage area is stored when the touch is detected, whereby the control unit 110 control unit stores at least one object matched with at least one clip identifier, the touch of which is detected, in the clipboard storage area. Namely, the control unit 110 detects whether there has occurred a touch of a clip identifier matched with at least one object that the user desires to clip, and stores the at least one object in the clipboard storage area included in the storage unit 175 of the mobile device 100.

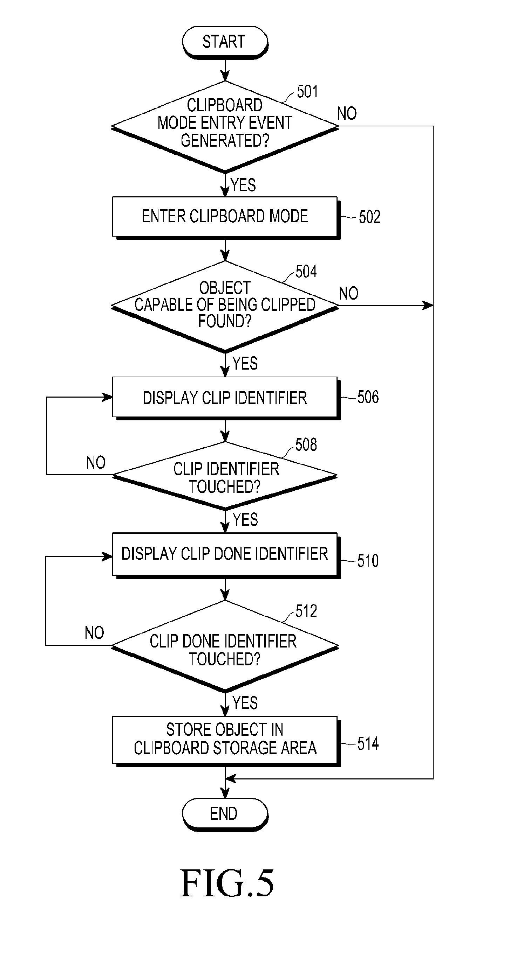

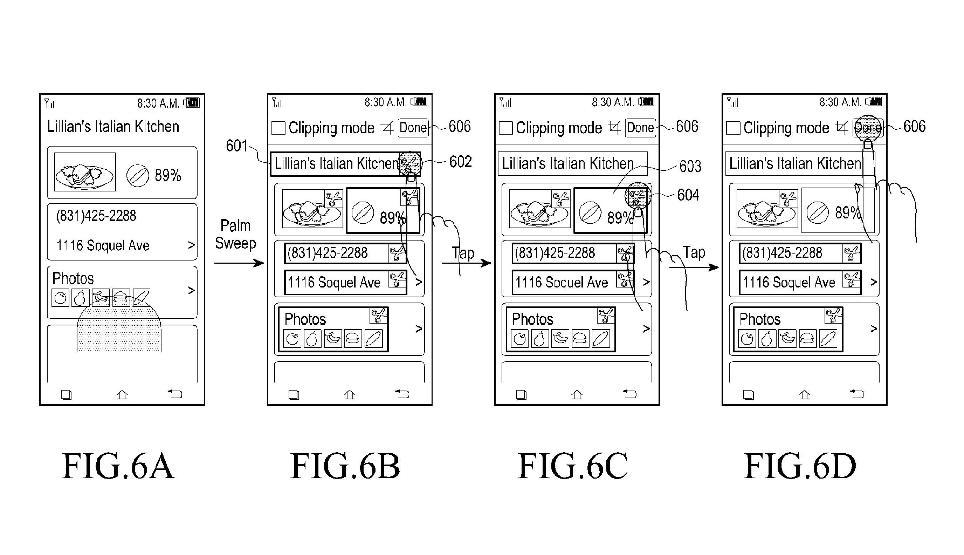

FIG. 5 is a flowchart showing exemplary operation of a method for providing a clipboard function in a mobile device according to another embodiment of the present invention. Also, FIGs. 6A-6D are views illustrating a method for providing a clipboard function in a mobile device according to another embodiment of the present invention.

Referring now to FIG. 5, a method for providing a clipboard function in a mobile device according to another embodiment of the present invention includes:

At step 501, detecting whether a clipboard mode entry event has occurred; at step 502, entering a clipboard mode; at step 504, searching for an object which may be clipped; at step 506, displaying a clip identifier; at step 508, detecting a touch of the clip identifier; at step 510, displaying a clip done identifier; at step 512, detecting a touch of a clip done identifier; and at step 514, storing an object in a clipboard storage area.

A description of steps 501 to 508 will be omitted because of the similarity between steps 501 to 508 and steps 301 to 308,.

At step 510 the displaying a clip done identifier is output when a touch of at least one clip identifier matched with at least one object which may be clipped is detected on the touch screen of the mobile device, under the control of control unit 110, which controls the display of a clip done identifier on the touch screen. The aforementioned refers to a case where a user intends to clip one object. In contrast, in the case where the user intends to clip multiple objects, a step of completing a clip is required. Therefore, after the selection of at least one object that the user intends to clip, a clip done identifier for completing a clip is displayed on the touch screen so that the user may indicate completion of a clip. At this time, the clip done identifier may be a "done" icon, for example.

Referring to FIGs. 6(a)-6(d), the user's palm sweep causes the mobile device to enter a clipboard mode as shown in FIG. 6(a), and when the control unit detects a touch of an icon 602 matched with an obj ect such as text 601 that the user intends to clip as shown in FIG. 6(b), the control unit may display a "done" icon 606 on the screen.

Referring back to the flowchart of FIG. 5, when the user's touch of the clip "done" icon 606 is detected, the control unit proceeds to step 512 corresponding to the next step. However, when there is no touch of the clip "done" icon 606, the control unit may continuously receive as input a touch of a clip identifier (for example, an icon) matched with an object intended to be clipped.

For example, as shown in FIG. 6(c), by detecting a touch of an icon 604 corresponding to a clip identifier matched with another object 603 including text and an image that the user intends to clip, the control unit may receive, as input, the multiple objects 601 and 603 that the user intends to clip. Accordingly, according to an exemplary embodiment of the present invention, there is an advantage in that multiple objects desired by the user can be clipped only by a touch and a clip can be easily completed after the multiple clips are performed.

Then, at step 512,, the control unit 110 determines whether a touch of the clip "done" identifier. Namely, the control unit 110 first detects a touch of the clip done identifier, and then completes the clip process. At this time, the identifier may be the clip done icon, and the touch may be one touch, a long press, or multiple touches of the clip done identifier. For example, when a touch of the clip done icon 606 is detected as shown in FIG. 6(d), the control unit 110 completes the clip process.

Then, at step 514 the controller 110 controls storing of an object in the clipboard storage area when a touch of the clip done identifier is detected. The control unit 110 controls storage of at least one object matched with the at least one clip identifier, the touch of which is detected in the clipboard storage area. When a touch of the "done" icon 606 corresponding to the clip done identifier is detected as shown in FIG. 6(d), the control unit 110 may store the two objects 601 and 603, which have been clipped from FIG. 6(b) and FIG. 6(c), in the clipboard storage area. Accordingly, according to another exemplary embodiment of the present invention, there is an advantage in that the user can clip multiple objects using only a small number of touches.

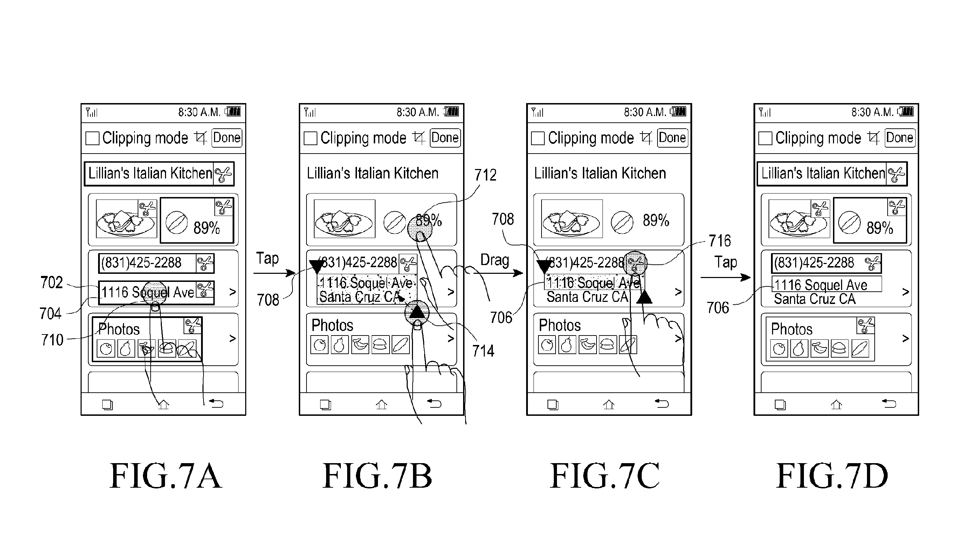

FIGs. 7A-7D are views illustrating a process for reducing an object to be clipped in a method for providing a clipboard function in a mobile device according to another exemplary embodiment of the present invention.

Referring now to FIG. 7, the method for providing a clipboard function in the mobile device according to another exemplary embodiment of the present invention has features in that a clip identifier 702 may be a guide area surrounding at least one object 704 and the guide area may be reduced so as to guide a partial area 706 of the at least one object 704. The control unit 110 may perform a control operation for causing the guide area 702 having a box shape to surround the object 704 including text having contents associated with an address as shown in FIG. 7(a). Then, the control unit may perform a control operation for first reducing the guide area 704 and then causing the reduced guide area to guide the partial area 706 of the object 704 as shown in FIG. 7(d). As described above, the control unit may perform a control operation for first reducing the guide area surrounding the initial object and then clipping only a part of the initial object. Accordingly, according to another exemplary embodiment of the present invention, there is an advantage in that the user may freely reduce a clip area desired by the user.

Also, the reduction may correspond to a process for detecting an event related to the guide area, displaying a handle, which may be located near the guide area and which may reduce or enlarge the guide area through dragging, on the touch screen, detecting the dragging of the handle, and reducing the guide area. First, the control unit 110 detects an event related to the guide area. The event may be the user's gesture corresponding to a touch on the guide area, or a long touch on the guide area, or a touch on an area of the touch screen excluding the guide area, which is continuous after the touch on the guide area. For example, as shown in FIGs. 7(a) and 7(b), the event may be a gesture, which first touches (see reference numeral 710) the guide area and continuously touches (see reference numeral 712) an area of the touch screen excluding the guide area. Next, when the event related to the guide area has been detected, the control unit 110 displays a handle, which may reduce or enlarge the guide area, on the touch screen. For example, the handles may be identifiers 708 and 714 located outside of the guide area as shown in each of of FIGs. 7(b) and 7(c). Also, the control unit 110 may first detect the dragging of the handle, and may then reduce the guide area. As shown in FIG. 7(b), the control unit 110 may first detect the dragging of the handle 714, namely, the dragging of the handle 714, which reduces the guide area, and may then reduce the guide area. At this time, another exemplary embodiment of the present invention may include an icon 716 corresponding to a clip identifier for completing the reduction process and storing at least one object matched with the reduced guide area in the clipboard storage area. Accordingly, when a touch of the icon 716 is detected, the control unit 110 may complete the process for reducing the guide area, and may store the at least one object matched with the reduced guide area in the clipboard storage area. Therefore, according to another exemplary embodiment of the present invention, there is an advantage in that a process for clipping an object of a size desired by the user can be easily performed by a touch.

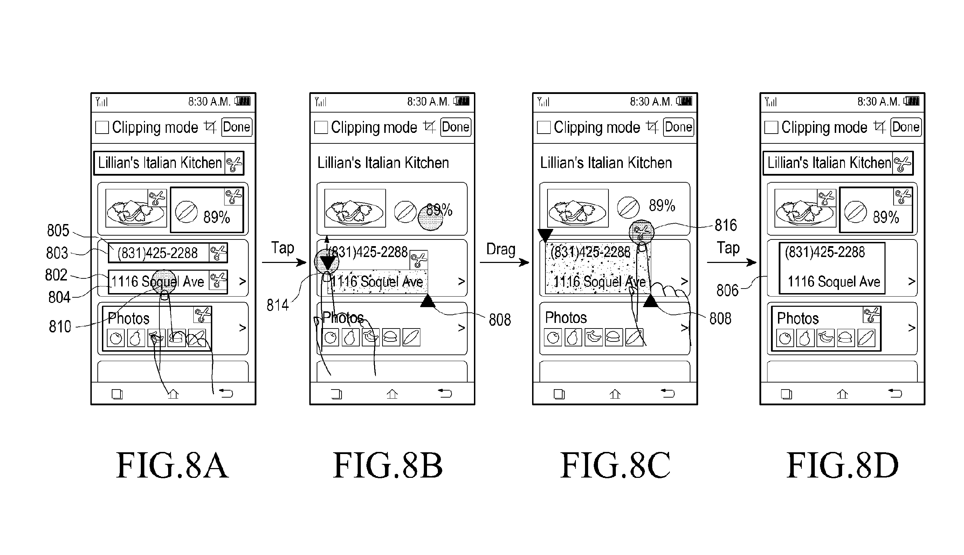

FIG. 8 is a view illustrating a process for enlarging an object to be clipped in a method for providing a clipboard function in a mobile device according to another exemplary embodiment of the present invention.

Referring now to FIGs. 8A-8D, the method for providing a clipboard function in the mobile device according to another exemplary embodiment of the present invention has features in that the clip identifier 702 is a first guide area 802 surrounding at least one first object 804 and the first guide area may be enlarged to a third guide area 806 including the first object 804 and a second guide area 803 surrounding another second object 805. For example, the control unit 110 may perform a control operation for causing the first guide area 802 having a box shape to surround the first object 804 including text having contents associated with an address as shown in FIG. 8(a). Then, the control unit may enlarge the first guide area 802 to the third guide area 806 including the second guide area 803. As described above, the control unit may perform a control operation for first enlarging the guide area surrounding the initial object and then clipping the enlarged object. Accordingly, according to another exemplary embodiment of the present invention, there is an advantage in that the user may freely enlarge a clip area desired by the user.

Also, according to another exemplary embodiment of the present invention, there is a feature in that the enlargement may correspond to a process for detecting an event related to the first guide area and, displaying a handle, which may be located near the first guide area and which may reduce or enlarge the first guide area through dragging, on the touch screen, detecting the dragging of the handle, and enlarging the first guide area to the third guide area including the first guide area and another second guide area. First, a control unit 110 detects an event related to the first guide area. At this time, the event may be the user's gesture corresponding to a touch on the first guide area, or a long touch on the first guide area, or a touch on an area of the touch screen excluding the first guide area, which is continuous after the touch on the first guide area. For example, the event may be a gesture corresponding to a long touch (see reference numeral 810) on the first guide area as shown in FIG. 8(a). Next, when the event related to the first guide area has been detected, the control unit 110 may display a handle, which may reduce or enlarge the first guide area, on the touch screen. For example, the handles may be identifiers 808 and 814 located outside of the first guide area as shown in each of FIGs. 8(b) and 8(c). Then, the control unit 110 may first detect the dragging of the handle, and may then enlarge the first guide area. As shown in FIG. 8(b), the control unit 110 may first detect the dragging of the handle 814, namely, the dragging of the handle 814, which enlarges the first guide area, and may then enlarge the first guide area. At this time, another exemplary embodiment of the present invention may include an icon 816 corresponding to a clip identifier for completing the enlargement process and storing at least one object matched with the enlarged guide area in the clipboard storage area. Accordingly, when a touch of the icon 816 is detected, the control unit 110 may complete the process for enlarging the guide area and may store the at least one object matched with the third guide area obtained by the enlargement process in the clipboard storage area. Therefore, according to another exemplary embodiment of the present invention, there is an advantage in that a process for clipping an object of a size desired by the user can be easily performed by a touch.

FIG.s 9A-9D are views illustrating a process for freely editing an object to be clipped in a method for providing a clipboard function in a mobile device according to another exemplary embodiment of the present invention.

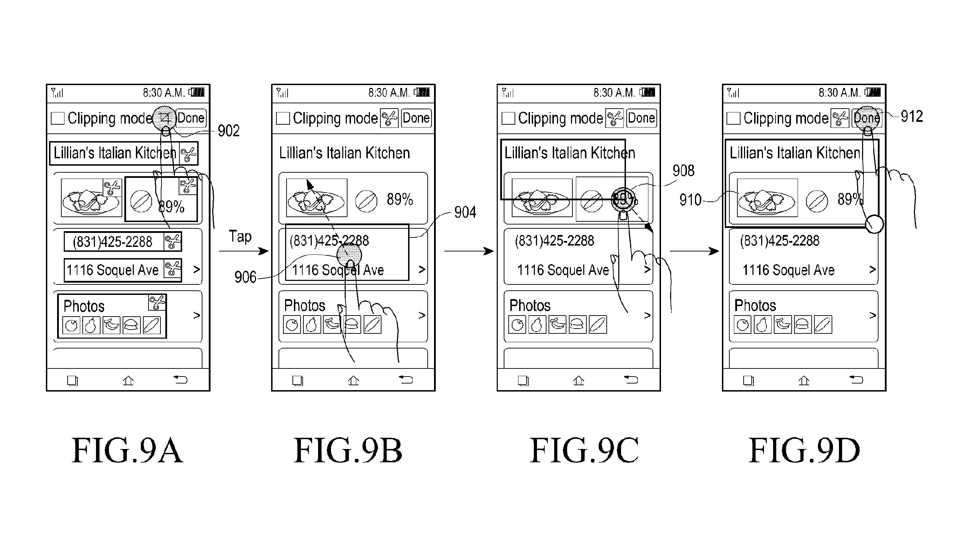

Referring to FIG. 9, the method for providing a clipboard function in the mobile device according to another exemplary embodiment of the present invention may further include: displaying a clip free editing area identifier 902 on the touch screen; detecting whether there is a touch of the clip free editing area identifier 902; displaying a free clip area 904, the size of which may be adjusted by dragging and which may be moved, when the touch is detected; determining a clip image 910 by detecting a dragging 906 and 908 of the free clip area 904; detecting a touch of a clip done icon 912; and storing the clip image 910 in the clipboard storage area. The control unit 110 first displays a clip free editing area identifier 902 on the touch screen. As shown in FIG. 9(a), the clip free editing area identifier 902 may be formed as an icon, and may be displayed on the touch screen. Then, the control unit detects whether there is a touch of the clip free editing area identifier 902. When the touch is detected, the control unit displays the free clip area 904. Namely, when a touch of the icon 902 is detected as shown in FIG. 9(a), the free clip area 904 may be displayed on the touch screen. The free clip area 904 may have a free shape (for example, a circle or quadrangle), and may have a shape of a quadrangle as shown in FIG. 9(b). Also, the free clip area 904 may have a size adjusted by dragging, and may be moved. Accordingly, the user may clip an image of a desired size and at a desired position. The free clip area 904 may be moved to a position desired by the user as shown in FIG. 9(b) and the free clip area 904 may be enlarged as shown in FIG. 9(c). Then, the control unit may detect the dragging 906 and 908 of the free clip area 904, and may determine the clip image 910. Namely, the clip image 910 may be determined as the area 910 as shown in FIG. 9(d). Then, the control unit 110 may detect whether there is a touch of the clip done icon 912, and may store the clip image 910 in the clipboard storage area. For example, the control unit may display the done icon 912 on the touch screen as shown in FIG. 9(d), may detect whether there is a touch of the done icon 912, and may store the clip image 910 in the clipboard storage area. Accordingly, according to another exemplary embodiment of the present invention, there is an advantage in that it is possible to store a clip image at a position and of a size desired by the user.

The method for providing a clipboard function in the mobile device according to another exemplary embodiment of the present invention has features in that when at least one object is stored in the clipboard storage area, additional information is collected by using the at least one object and the additional information is stored together with the at least one object in the clipboard storage area. The additional information which is information related to the contents of the at least one object, may be, for example, metadata and data collected through an Internet search. The additional information may be collected through the communication modules 120 and 130 (FIG. 1) of the mobile device 100 by using the at least one object. Namely, the control unit 110 may transmit the at least one object to a search server (or search engine) by performing communication through the communication modules 120 and 130, and may receive additional information found by the search server through the communication modules 120 and 130. Also, the control unit 110 may collect the additional information by executing an Internet application of the mobile device 100. Namely, the control unit 110 may search for the contents of the at least one object on a search site executed in the Internet application, and may collect the additional information. Accordingly, according to an exemplary embodiment of the present invention, there is an advantage in that the additional information related to the object to be stored in the clipboard can be stored together with the object in the clipboard.

The additional information may be metadata. Metadata which is data added to at least one of text, an image, an image file and a sound file, may be data representing the contents of at least one of the text, the image, the image file and the sound file. For example, when the object is a sound file, the metadata may be information, such as a date of generation of the sound file, a composer, a songwriter, lyrics, and a vocal performer of the sound. Also, the additional information may be data collected by performing a search through text parsing. When the object is text, the data collected by performing a search through text parsing may be information collected through a search for a part of the text. Also, the additional information may be GPS data. The GPS data may be collected through the GPS module 155 of the mobile device 100, and may be, for example, GPS data of the mobile device 100 in the case of storing the object in the clipboard storage area. Also, the additional information may be a URL (Uniform Resource Locator). Namely, when the object is a part of a web page, the additional information may be an original web URL of the web page. Also, the additional information may be all data excluding or including the object on the screen. Also, the additional information may be document form data of the object. Further, the additional information may be a relevance value collected in a search process after the search for the object.

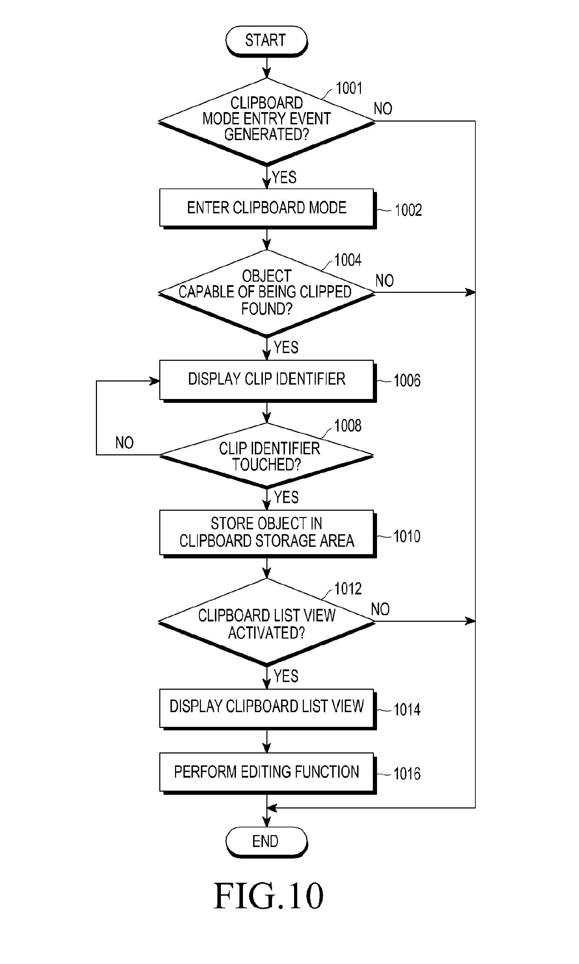

FIG. 10 is a flowchart showing a method for providing a clipboard function in a mobile device according to still another exemplary embodiment of the present invention.

Referring now to FIG. 10, a method for providing a clipboard function in a mobile device according to still another exemplary embodiment of the present invention includes: at step 1001, detecting whether a clipboard mode entry event has occurred; at step 1002, entering a clipboard mode; at step 1004, searching for an object which may be clipped; at step 1006, displaying a clip identifier; at step 1008, detecting a touch of the clip identifier; at step 1010, storing an object in a clipboard storage area ; at step 1012, detecting the activation of a clipboard list view; at step 1014, displaying the clipboard list view and at step 1016, editing a clipboard list.

A description of steps 1001 to 1010 will be omitted because steps 1001 to 1010 are substantially the same as steps 301 to 310,.

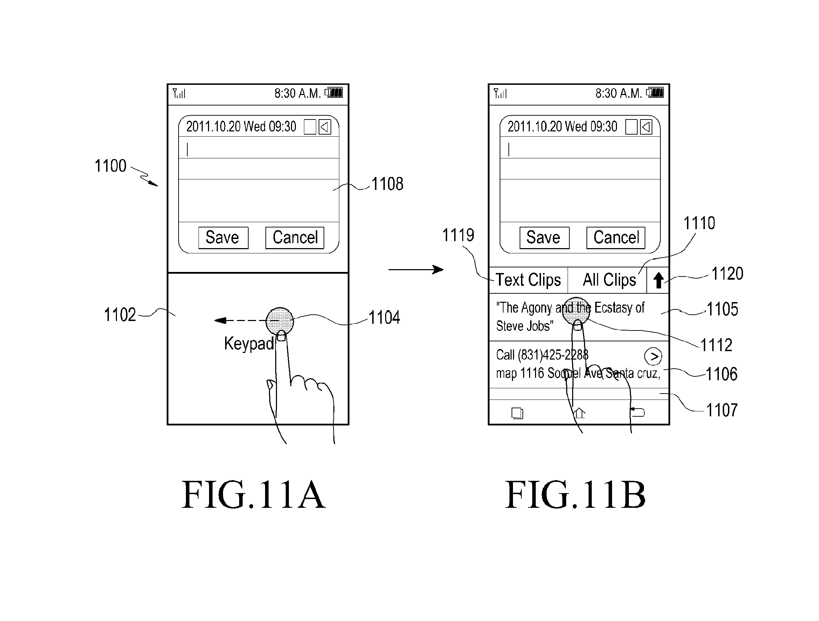

In a step 1012 of detecting the activation of a clipboard list view, the control unit 110 detects whether or not a list view activation event for activating a clipboard list view has occurred. For example, when a character input keypad window is displayed on the touch screen, the list view activation event may be the detection of a dragging of a predetermined length within the character input keypad window. FIGs. 11A and 11B is a view illustrating the activation of a clipboard list view in a method for providing a clipboard function in a mobile device according to still another embodiment of the present invention. Referring to of FIG. 11(a) when a character input keypad window 1102 is displayed on a touch screen 1100, the list view activation event may be a dragging of a predetermined length within the character input keypad window, for example, a dragging 1104, a distance of which is a predetermined length to the left. At this time, as shown in FIG. 11(b), the control unit may detect the dragging 1104, and may activate a clipboard list view 1106. The activation may imply that the clipboard list view 1106 newly appears on the touch screen. Accordingly, according to still another exemplary embodiment of the present invention, there is an advantage in that the list view activation event enables the display of the clipboard list view on the screen of the mobile device.

Also, the list view activation event may be characterized by displaying a list view activation icon on the touch screen and detecting a touch of the list view activation icon. For example, the list view activation icon may be an icon included in a menu of the mobile device. Also, the list view activation icon may be an icon (see reference numeral 203 in FIG. 2) for executing an application activating a clipboard display area.

Further, the list view activation event may be characterized by detecting an input area in the case of displaying the input area on the screen of the mobile device. Namely, when an input area 1108 is displayed as shown in FIG. 11(a), the control unit 110 may perform a control operation for detecting whether the input area 1108 has been displayed on the screen of the mobile device. When the input area 1108 has been displayed, the control unit 110 may perform a control operation for automatically displaying the clipboard list view 1106 on the touch screen 1100 as shown in FIG. 11(b).

Also, the list view activation event may be characterized by displaying the list view activation icon on the touch screen and detecting a touch of the icon when the input area is detected in the case of displaying the input area on the screen of the mobile device. Namely, the control unit 110 may detect whether the input area 1108 has been displayed on the screen of the mobile device as shown in FIG. 11(a). When the input area has been displayed, the control unit 110 may display the list view activation icon on the touch screen. At this time, the list view activation icon may be an icon included in a menu of the mobile device. Also, the list view activation icon may be the icon (see reference numeral 203 in FIG. 2) for executing an application activating the clipboard display area. Then, the control unit may detect whether there is a touch of the list view activation icon. When the touch is detected, the control unit may display a clipboard list view on the touch screen.

Then, at step 1014 of displaying the clipboard list view, when the list view activation event has occurred, the control unit 110 displays the clipboard list view, which displays at least one object stored in the clipboard storage area, on the screen of the mobile device. The at least one object may include at least one of text, an image, an image file and a sound file.

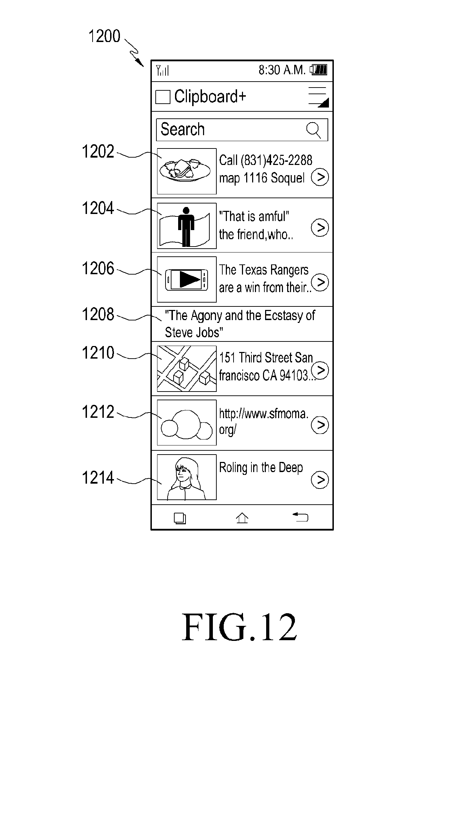

FIG. 12 is a view illustrating the display of a clipboard list view on a screen of the mobile device in a method for providing a clipboard function in a mobile device according to still another exemplary embodiment of the present invention.

Referring now to FIG. 12, the clipboard list view is a view which displays at least one object (see reference numerals 1202 to 1214) stored in the clipboard storage area on a touch screen 1200. At this time, the control unit may display at least one partial screen area including the at least one object, on the touch screen. The partial screen area signifies an area displayed so as to include the at least one object. Also, the number of the partial screen areas may be 7 to 9 in view of a small screen of the mobile device. Additionally, the control unit may display, in a vertical or horizontal direction, the at least one object according to the order, in which a touch of the clip identifier has been detect. Further, when the at least one object includes images and text, the control unit may display the images at the left side (see reference numerals 1202 to 1206), and may display the text at the right side (see reference numerals 1208 to 1214). In the case where the object is a web page, the control unit may display an uppermost screen of the web page at the left side and may display uppermost text of the web page at the right side (see reference numerals 1202 and 1204). In the case where the object is a moving image file, the control unit may display a first screen image of the moving image at the left side and may display text, such as the title of the moving image, at the right side (see reference numeral 1206). In the case where the object is text including an address, after performing a search by using the address, the control unit may display a map image showing the address at the left side display and may display the address text at the right side (see reference numeral 1210). In the case where the object is a web URL, the control unit may search for a first page of the web URL, may display the first found page at the left side, and may display the web URL at the right side (see reference numeral 1212). In the case where the at least one object includes images and texts, the control unit may select a first-located image and text from among multiple images and multiple texts included in the at least one object, may generate a thumbnail from the first-located image and text, and may display the generated thumbnail in the clipboard list view. When the object is a music file, the control unit may display ID3 Tag information included in the music file together with the music file, or may display an album image of the music file together with the music file (see reference numeral 1214).

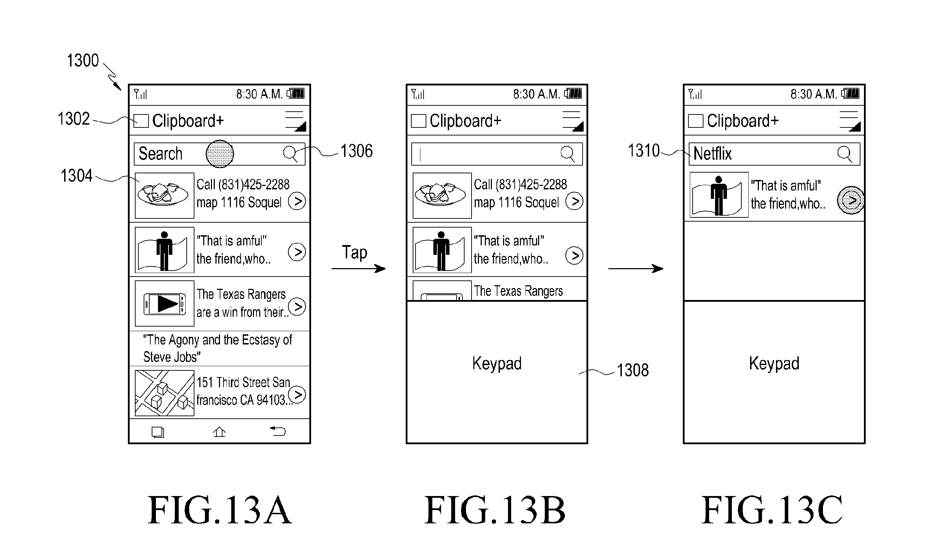

FIGs. 13A-13D are views illustrating the display of a search bar on a clipboard list view screen of the present invention.

In a method for providing a clipboard function in a mobile device according to still another exemplary embodiment of the present invention, the clipboard list view has a feature of further including a search bar (or search window) used to search for the at least one object.

Referring now to FIG. 13(a), a clipboard list view 1302 displayed on a touch screen 1300 may display at least one object 1304, and the clipboard list view 1302 may include a search bar 1306. When the control unit detects a touch on the search bar 1306, the control unit may receive as input a search word from a user, as shown in FIG. 13(b). Then, the control unit may receive as input a search word 1310 from the user as shown in FIG. 13(c), may search for at least one object including the search word 1310, and may display only at least one found object in the clipboard list view 1302, as shown in FIG. 13(c).

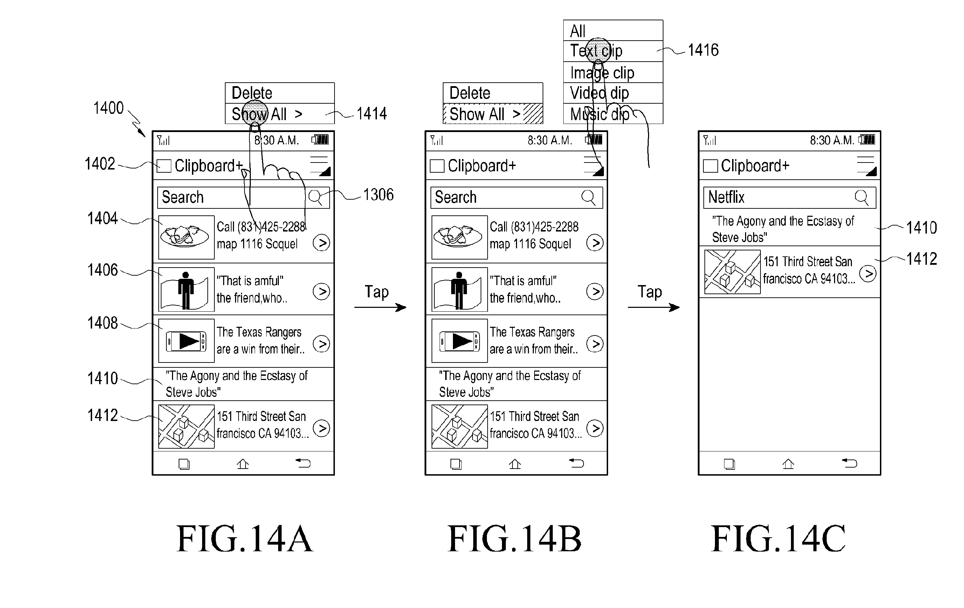

FIG. 14 is a view illustrating the display of a sorting bar on a clipboard list view screen of the present invention.

In the method for providing a clipboard function in the mobile device according to still another exemplary embodiment of the present invention, the clipboard list view has a feature of further including a sorting bar used to sort the at least one object into types.

Referring now to FIG. 14(a), a clipboard list view 1402 displayed on a touch screen 1400 may display at least one object 1404 to 1412, and the clipboard list view 1402 may include sorting bars 1414 and 1416. When the control unit 110 detects a touch on the sorting bar 1414 from a user as shown in FIG. 14(a), the control unit may display the sorting bar 1416 which shows the type of an object as shown in FIG. 14(b). For example, FIG. 14(b) illustrates a sorting bar for text, an image, an image file and a music file. Accordingly, when the control unit receives a request for sorting an object corresponding to the type of text from the user as shown in FIG. 14(b), the control unit may display the at least one object 1410 and 1412 related to the type of text in the clipboard list view, as shown in FIG. 14(c).

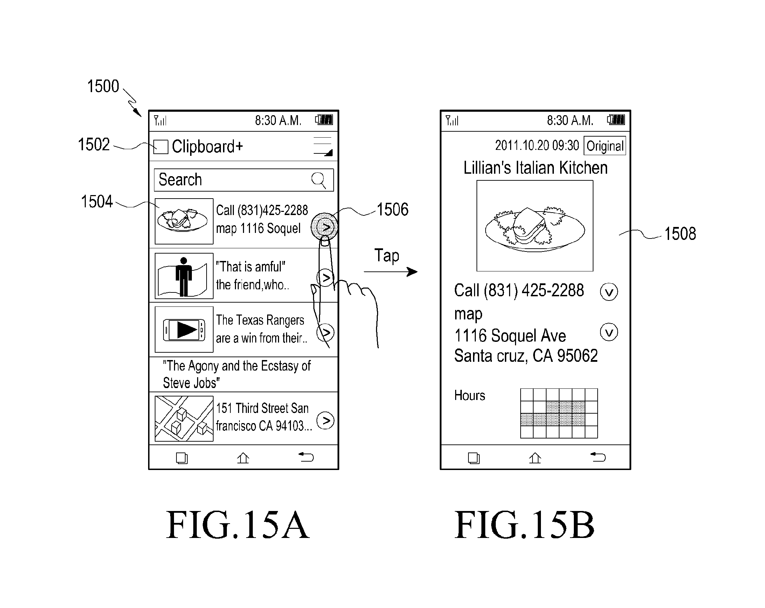

FIGs. 15A-15B are views illustrating the display of a brief list view of a clipboard on a clipboard list view screen of the present invention.

In the method for providing a clipboard function in the mobile device according to still another exemplary embodiment of the present invention, the clipboard list view has a feature of further including a brief list view of a clipboard, which is displayed in such a manner as to delete a part of the contents of the at least one object. Referring now to FIG. 15(a), a brief list view of a clipboard 1502 displayed on a touch screen 1500 may display only brief information 1504 on at least one object 1504, instead of all information thereon. FIG. 15(b) shows the display of all information 1508 on the at least one object 1504. Namely, FIG. 15(b) shows the display of the object 1504 including detailed information, such as a title, an image, a telephone number, an address and business hours of Lillian's Italian Kitchen. In contrast, FIG.(a) 15 illustrates the brief list view of the clipboard, which shows an object including only brief information, such as an image, a telephone number and an address. The mobile device has a small screen due to the characteristics thereof, and needs to briefly display information. Accordingly, when a brief list view of a clipboard is provided as in the present invention, many objects may be displayed on one screen as shown in FIG. 15(a), so that an efficient interface can be provided to the user. Also, when the control unit detects a touch of an all information view icon 1506 for viewing all information in the brief list view of the clipboard as shown in FIG. 15(a), the control unit may change a screen to a clipboard list view showing the object 1508 including all the information.

FIG.s 16A-16C are views illustrating the display of an additional information icon on a clipboard list view screen of the present invention.

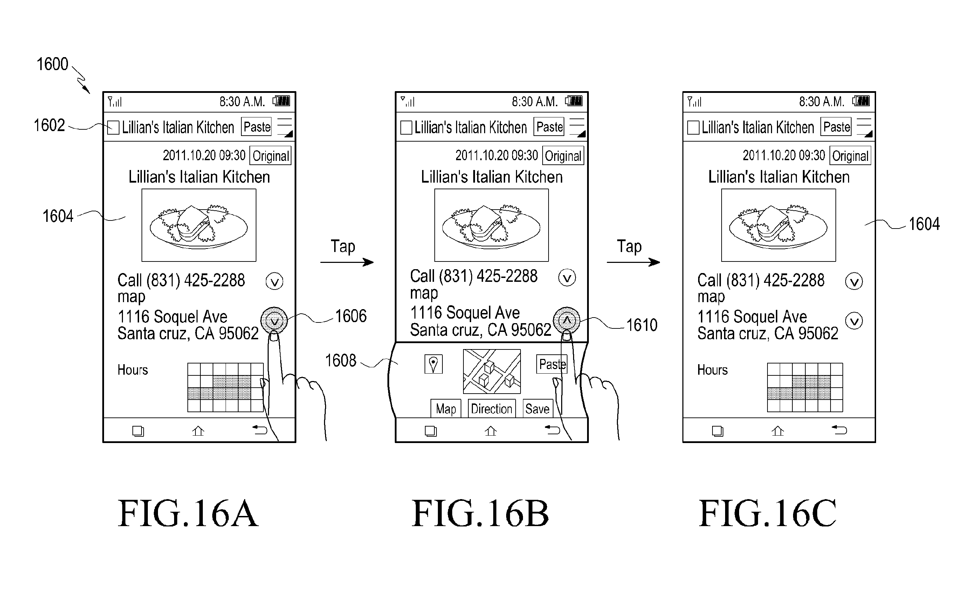

In the method for providing a clipboard function in the mobile device according to still another exemplary embodiment of the present invention, the clipboard list view has a feature of further including an additional information icon for additionally displaying additional information collected by using the at least one object on the touch screen. Referring to FIG. 16(a), at least one object 1604 in a clipboard list view 1602 displayed on a touch screen 1600 may include additional information. The additional information may be collected by the control unit. The additional information which is information related to the contents of the at least one object, may be, for example, metadata and data collected through an Internet search. The additional information may be collected through the communication modules 120 and 130 of the mobile device 100 by using the at least one object. Namely, the control unit 110 may transmit the at least one object to a search server (or search engine) by performing communication through the communication modules 120 and 130, and may receive additional information found by the search server through the communication modules 120 and 130. Also, the control unit 110 may collect the additional information by executing an Internet application of the mobile device 100. Namely, the control unit 110 may search for the contents of the at least one object on a search site executed in the Internet application, and may collect the additional information. Also, as shown in FIG. 16(a), the clipboard list view 1602 may further include an additional information icon 1606 for additionally displaying additional information collected by using the at least one object 1604 on the touch screen. At this time, when the control unit detects a touch of the additional information icon 1606, the control unit may display collected additional information 1608 at a lower end of the object as shown in FIG. 16(b). For example, in FIG. 16(b), the object is address text, and additional information that the control unit collects from the address text is a map image related to the address. Also, a return icon 1610 for again removing the additional information from the clipboard list view where the additional information is displayed, may be displayed the in the clipboard list view. When the control unit detects a touch of the return icon 1610 as shown in FIG. 16(b), the control unit may display a clipboard list view, from which the additional information is removed, on the screen as shown in FIG. 16(c).

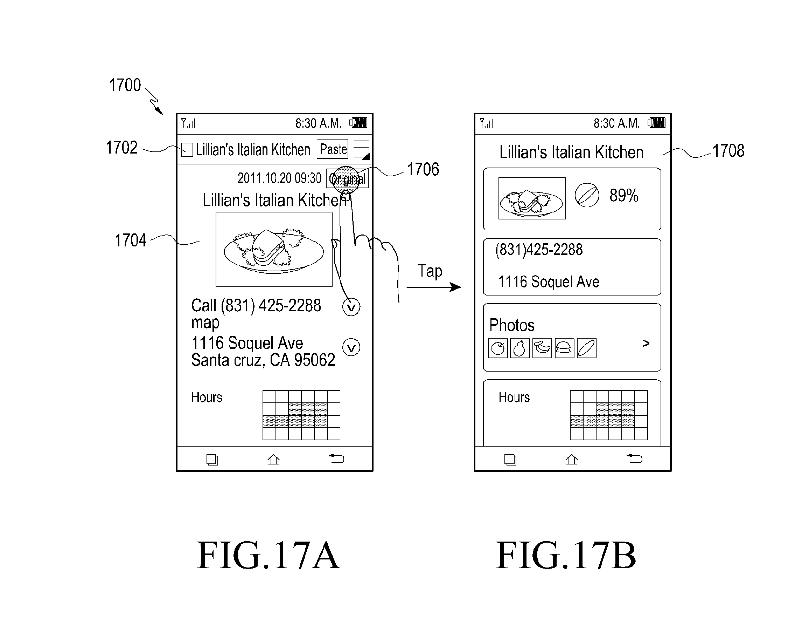

FIGs. 17A-17B are views illustrating the display of an original icon on a clipboard list view screen of the present invention.

In a method for providing a clipboard function in a mobile device according to still another exemplary embodiment of the present invention, the clipboard list view has a feature of further including an original icon for shifting the current screen to a screen displaying a URL in a case where the at least one object includes information on the URL. As shown in FIG. 17(a), a clipboard list view 1702 displayed on a touch screen 1700 may include an original icon 1706. In a case where an object displayed in the clipboard list view includes URL information as shown in FIG. 17(a), if the control unit detects a touch of an original icon for shifting the current screen to a screen displaying the URL, the control unit may shift the screen to an Internet screen displaying the URL by executing an Internet application included in the mobile device, as shown in FIG. 17(b).

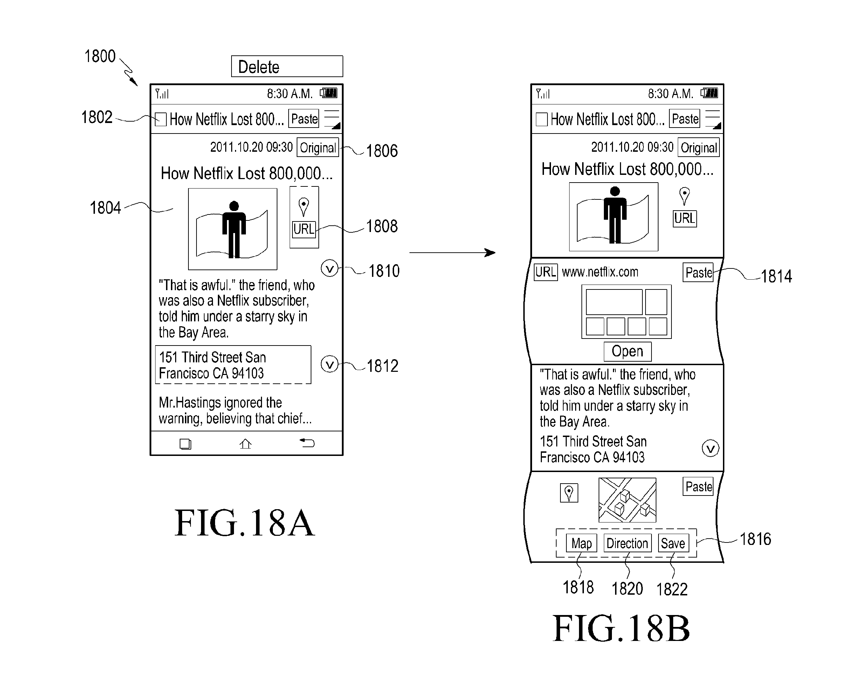

FIG. 18 is a view illustrating the use of additional information on a clipboard list view screen of the present invention.

Referring to FIG. 18(a), at least one object 1804 of a clipboard list view 1802 displayed on a touch screen 1800 includes additional information, and the clipboard list view 1802 displays additional information icons 1808, 1810 and 1812, which use the additional information, and an original icon 1806. At this time, when a touch of the additional information icon 1810 is detected, the additional information may be displayed as shown in FIG. 18(b). At this time, the clipboard list view 1802 may include icons which use the additional information. For example, the additional information icon may be at least one of an icon 1814 which enables copying or pasting of only additional information, an icon 1818 for displaying a map image when the additional information is the map image, an icon 1820 for navigating to a destination appearing on the map, and an icon 1822 for storing the image map in the storage unit. Also, the clipboard list view 1802 may include a box 1816 including the at least one icon.

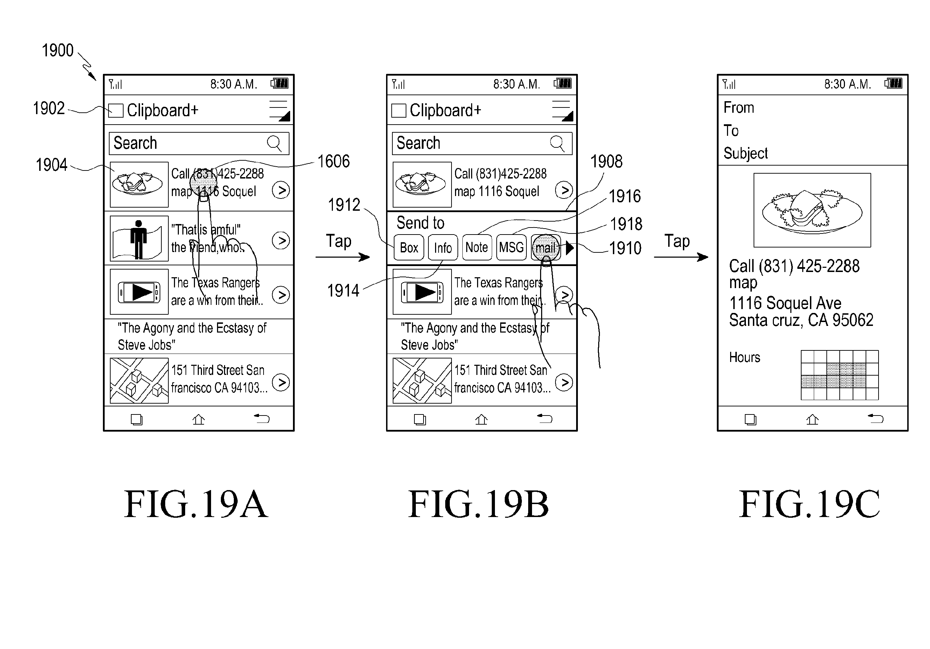

FIG. 19 to FIG. 21 are views each illustrating the display of send icons on a clipboard list view screen of the present invention.

In the method for providing a clipboard function in the mobile device according to still another exemplary embodiment of the present invention, the clipboard list view has a feature of further including send icons for executing a target application and for pasting at least one object stored in the clipboard storage area into an input area of the target application.

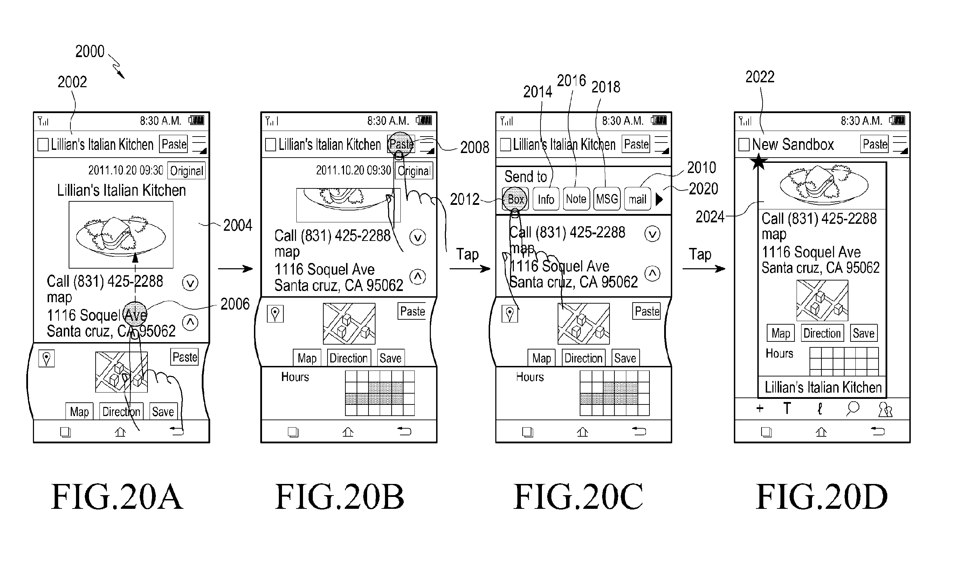

Referring to FIG. 19(a), when the control unit detects a send icon execution event with respect to at least one object 1904 of a clipboard list view 1902 displayed on a touch screen 1900, the control unit may display send icons 1912 to 1918 as shown in FIG. 19(b). At this time, the send icon execution event may be a touch of the object 1904, or a long touch thereof, or a touch of an icon (see reference numeral 2008 in FIG. 20) included in a separate menu. When the control unit detects the send icon execution event, the control unit may display the send icons 1912 to 1918 near the object 1904. When the control unit detects a touch of the send icon, the control unit may execute a target application, and may execute pasting of at least one object stored in the clipboard storage area into an input area of the target application. For example, when the control unit detects a touch of an e-mail icon among the send icons as shown in FIG. 19(b), the control unit may execute an e-mail application as a target application, and may execute pasting of the object 1904 including an image and text into an e-mail input area as shown in FIG. 19(c).

Also, referring to FIGs. 20A-20D, the send icon execution event may be a touch of the icon (see reference numeral 2008 in FIG. 20) included in the separate menu. Namely, the control unit first detects a user's dragging 2006 as shown in (a) of FIG. 20, and then sets a screen of the touch screen as a screen, from which the user desires to clip at least one object 2004 displayed in a clipboard list view 2002. Then, the control unit detects a touch of the icon 2008 included in the separate menu as the send icon execution event in FIG. 20(b), and displays the send icons 2012 to 2020 on the screen as shown in FIG. 20(c). Next, when the control unit detects a user's touch of, for example, an icon for providing a cloud service among the send icons, the control unit may execute an application 2022 providing the cloud service, and may copy or paste a screen image 2024 at a time point of touching the send icon into an input area of the application.

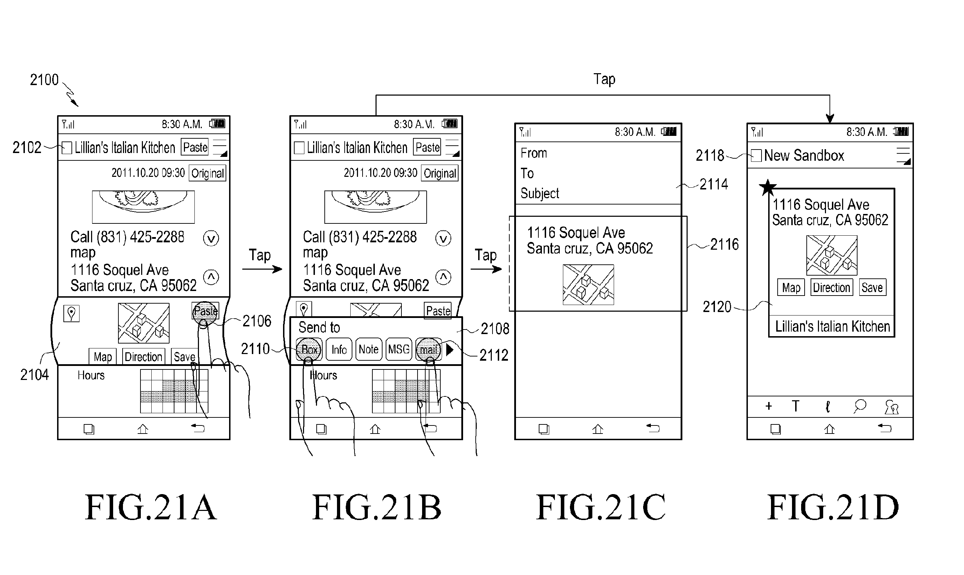

Also, referring to FIGs. 21A-21D, the send icon execution event may be a touch of an icon which uses additional information, as described in FIG. 18. As shown in FIG. 21(a), when additional information 2104 is displayed in a clipboard list view 2102 displayed on a touch screen 2100, an icon 2106 which uses the additional information, may be displayed. At this time, when the control unit detects a touch of the icon which uses the additional information, the control unit may display send icons 2108, 2110 and 2112. Then, when the control unit detects a touch of the send icon, the control unit may execute a target application related to the send icon, and may copy or paste the additional information into an input area of the target application. When the control unit detects a touch of an icon 2110 for providing a cloud service in FIG. 21(b), the control unit may execute a cloud application, and may copy the additional information into an input area of the application as shown in FIG. 21(d). Otherwise, when the control unit detects a touch of an icon 2112 for an e-mail application in FIG. 21(b), the control unit may execute the e-mail application, and may copy the additional information into an input area of the e-mail application as shown in FIG. 21(c).

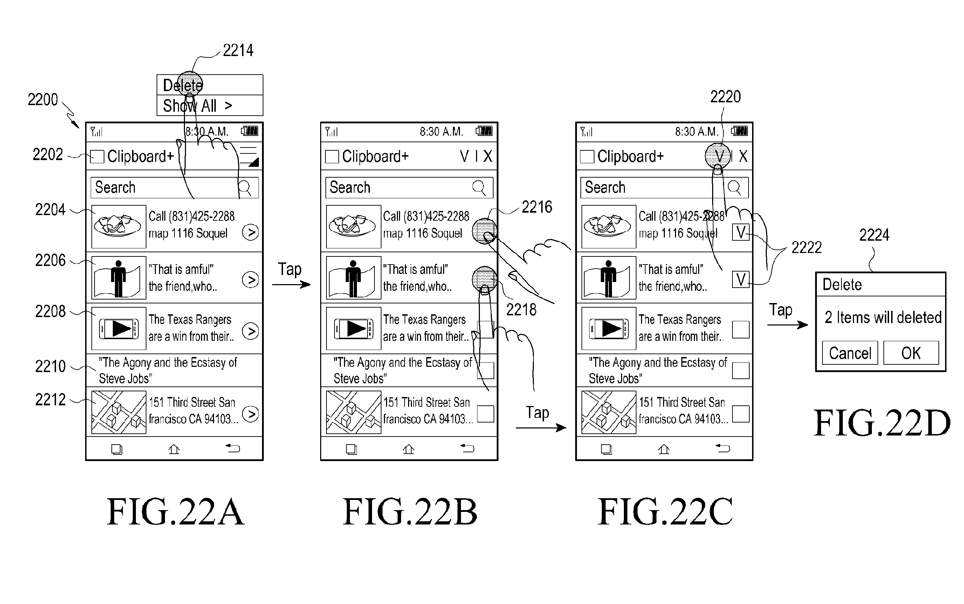

FIGs. 22A-22D are views illustrating an editing process on a clipboard list view screen of the present invention.

The method for providing a clipboard function in the mobile device according to still another exemplary embodiment of the present invention may further include a step of editing at least one object displayed in the clipboard list view. The editing may perform functions, such as an add function, a restore function, a select-all function, a delete function, a copy function, and a paste function. For example, a delete function will be described with reference to FIG. 22. Referring to FIG. 22, at least one object 2202 to 2212 is displayed in a clipboard list view 2202 displayed on a touch screen 2200. Also, the control unit may display an editing bar which provides functions for editing, and the control unit may display a deletion process as shown in FIG. 22(b) when the control unit detects a touch of a delete icon 2214 in the editing bar. Herein, when the control unit detects a touch of each of delete selected boxes 2216 and 2218 for deleting at least one object, the control unit also detects a touch of an icon 2220 for completing deletion as shown in FIG. 22(c), and the control unit detects a touch of OK in a message asking a final question about deletion as shown in FIG. 22(d), the control unit may delete the selected object 2222.

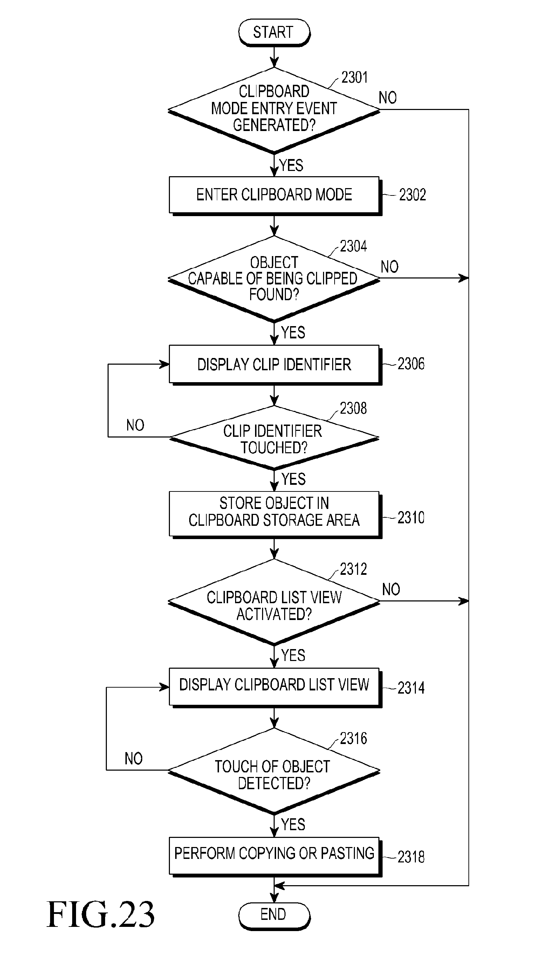

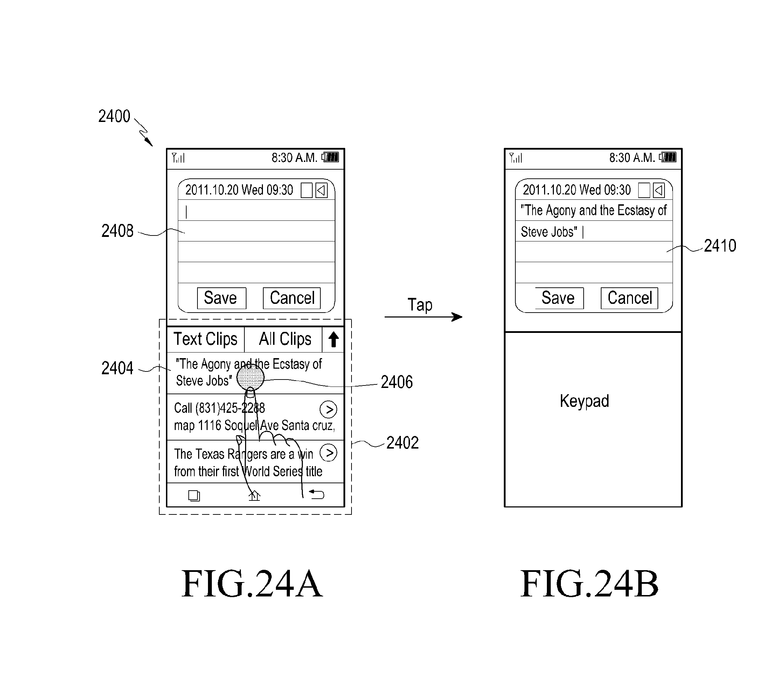

FIG. 23 is a flowchart showing exemplary operation of a method for providing a clipboard function in a mobile device according to yet another exemplary embodiment of the present invention. FIG. 24A-24B are views illustrating performing of a copy operation or a paste operation on a screen in a method for providing a clipboard function in a mobile device according to yet another exemplary embodiment of the present invention.

Referring to FIG. 23 and FIGs. 24(a)-24(b), a method for providing a clipboard function in a mobile device according to yet another exemplary embodiment of the present invention includes: detecting whether a clipboard mode entry event has occurred (step 2301); entering a clipboard mode (step 2302); searching for an object which may be clipped (step 2304); displaying a clip identifier (step 2306); detecting a touch of the clip identifier (step 2308); storing an object in a clipboard storage area (step 2310); detecting the activation of a clipboard list view (step 2312); displaying the clipboard list view (step 2314); detecting a touch of an object (step 2316); and performing copying or pasting (step 2318).

A description of steps 2301 to 2314 will be omitted because steps 2301 to 2314 are substantially similar to steps 1001 to 1014 as described in FIG. 10,.

In a step (step 2316) of detecting a touch of an object, the control unit 110 detects a touch of at least one object displayed in a clipboard list view. Referring to FIG. 24(a), the control unit may detect a touch 2406 of at least one object 2404 displayed in a clipboard list view 2402 displayed on a touch screen 2400.

Then, in a step (step 2318) of performing copying or pasting, referring to FIG. 24(b), when the control unit detects the touch 2406 of the at least one object 2404, the control unit may copy or paste (see reference numeral 2410) the at least one object 2404, the touch of which is detected, into an input area 2408 displayed on the touch screen.

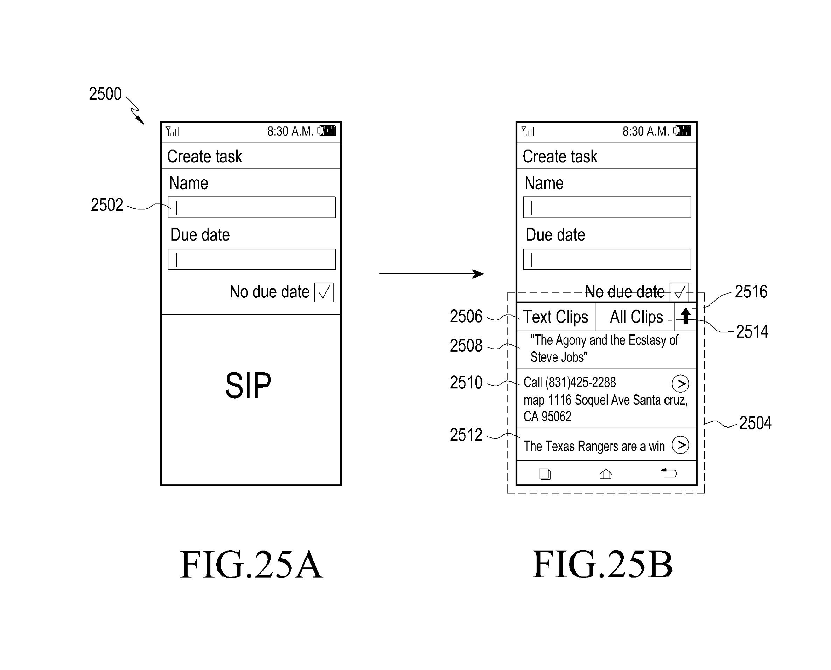

FIG. 25 to FIG. 31 are views illustrating a method for providing a clipboard function in a mobile device according to yet another exemplary embodiment of the present invention.

In the method for providing a clipboard function in the mobile device according to yet another exemplary embodiment of the present invention, the clipboard list view has a feature of further including a clipboard list view for each type, which displays only at least one object of a type capable of being input into an input area, after the at least one object is selected from among one or more objects stored in the clipboard storage area. The object may include at least one of text, an image, an image file and a sound file, and thus may be classified into at least one of text, an image, an image file and a sound file. Accordingly, the clipboard list view for each type may display at least one object according to the classification in order to include at least one of text, an image, an image file and a sound file. Also, the clipboard list view for each type may display only the at least one object of a type capable of being input, according to the type of an object which may be input into an input area displayed on the screen. Namely, the control unit may detect the type of an object which may be input into an input area displayed on the screen, may select at least one object belonging to the detected type from among one or more objects stored in the clipboard storage area, and may display the at least one selected object as the clipboard list view for each type.

Referring now to FIG. 25A and 25B, the control unit 110 may detect that the type of an object, which may be input into an input area 2502 displayed on a touch screen 2500, is text. Input area 2502 is an area for inputting a name. At this time, the control unit 110 may first select objects 2508 to 2512 corresponding to text, and may then display a clipboard list view 2504 for each type. Then, when the control unit has detected that a field of the input area 2502 displayed on the touch screen 2500 is a text field, the control unit may extract only text from the object corresponding to or including the text, and may display the extracted text in the clipboard list view 2504 for each type. At this time, the control unit may display a menu icon 2506 for displaying the clipboard list view 2504 for each type in the clipboard list view, and may display the clipboard list view 2504 for each type when the control unit detects a touch of the menu icon 2506. On the other hand, when the control unit detects a touch of an icon (All Clips) 2514 for displaying a clipboard list view, the control unit may display the clipboard list view which shows at least one object of all types without discriminating between types. Also, when the control unit detects a touch of a full screen icon 2516 for enlarging the clipboard list view and displaying an enlarged clipboard list view on a full screen, the control unit displays the clipboard list view on the full screen, as shown in FIG. 12.

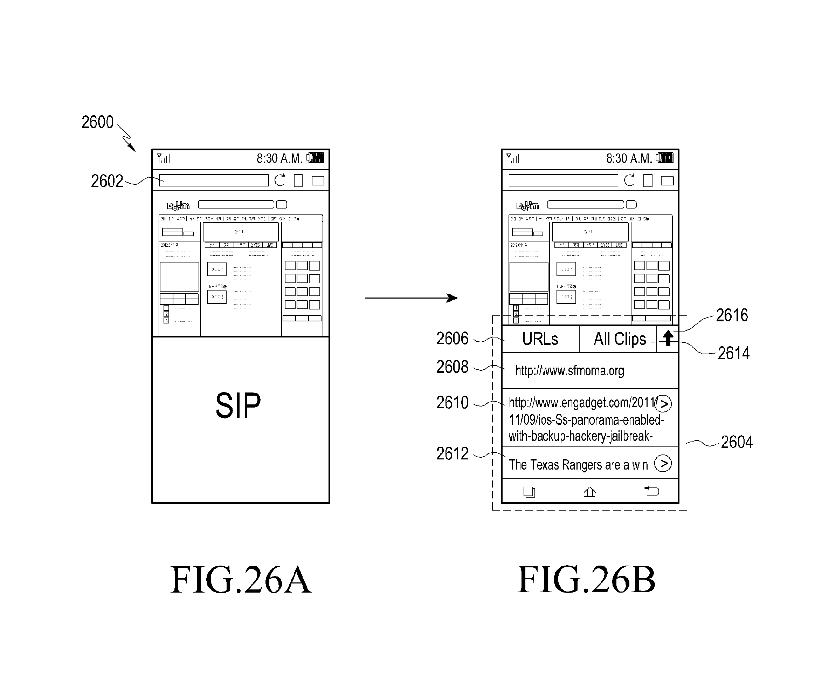

Referring now to FIGs. 26A and 26B, the control unit 110 may detect that the type of an object, which may be input into an input area 2602 displayed on a touch screen 2600, is text. the reason is because the input area 2602 is an area for inputting an Internet URL. At this time, the control unit 110 may first select objects 2608 to 2612 corresponding to text, and may then display a clipboard list view 2604 for each type. Then, when the control unit has detected that a field of the input area 2602 displayed on the touch screen 2600 is a URL field, the control unit may extract only text from the object corresponding to or including the text, and may display the extracted text in the clipboard list view 2604 for each type. At this time, the control unit may display a menu icon 2606 for displaying the clipboard list view 2604 for each type in the clipboard list view, and may display the clipboard list view 2604 for each type when the control unit detects a touch of the menu icon 2606.

On the other hand, when the control unit detects a touch of an icon (All Clips) 2614 for displaying a clipboard list view, the control unit may display the clipboard list view which shows at least one object of all types without discriminating between types.

Also, when the control unit detects a touch of a full screen icon 2616 for enlarging the clipboard list view and displaying an enlarged clipboard list view on a full screen, the control unit displays the clipboard list view on the full screen, as shown in FIG. 12.

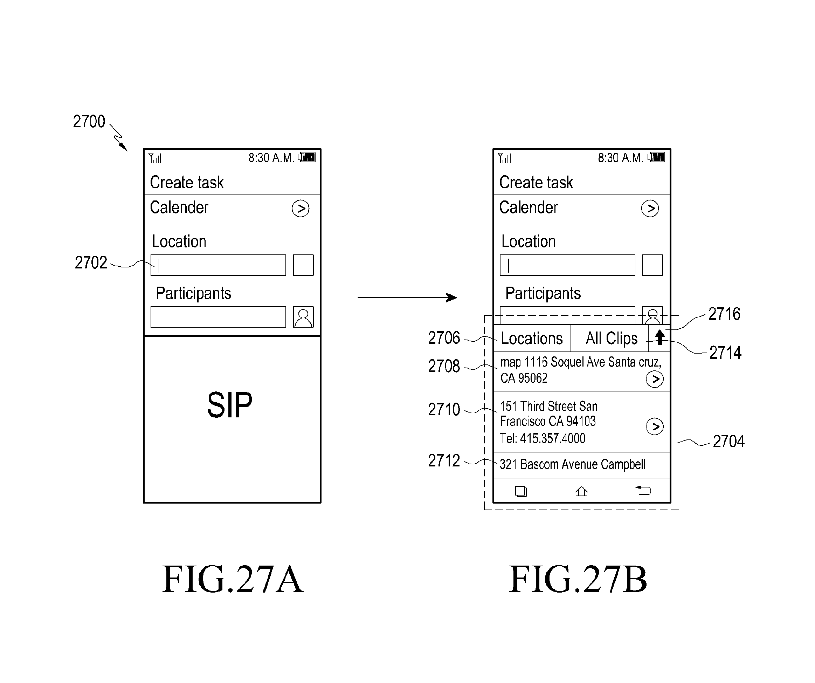

Referring now to FIG. 27, the control unit 110 may detect that the type of an object, which may be input into an input area 2702 displayed on a touch screen 2700, is text. The reason for detecting the type of object is because the input area 2702 is an area for inputting a location. At this time, the control unit 110 may first select objects 2708 to 2712 corresponding to text, and may then display a clipboard list view 2704 for each type. Then, in a case where the control unit has detected that a field of the input area 2702 displayed on the touch screen 2700 is a location field, when a name or coordinates of a location are displayed in text, or when a name or coordinates of a location are displayed in an object including text, the control unit may extract only text related to the name or coordinates, and may display the extracted text in the clipboard list view 2704 for each type.

At this time, the control unit may display a menu icon 2706 for displaying the clipboard list view 2704 for each type in the clipboard list view, and may display the clipboard list view 2704 for each type when the control unit detects a touch of the menu icon 2706.

On the other hand, when the control unit detects a touch of an icon (All Clips) 2714 for displaying a clipboard list view, the control unit may display the clipboard list view which shows at least one object of all types without discriminating between types. Also, when the control unit detects a touch of a full screen icon 2716 for enlarging the clipboard list view and displaying an enlarged clipboard list view on a full screen, the control unit displays the clipboard list view on the full screen, as shown in FIG. 12.

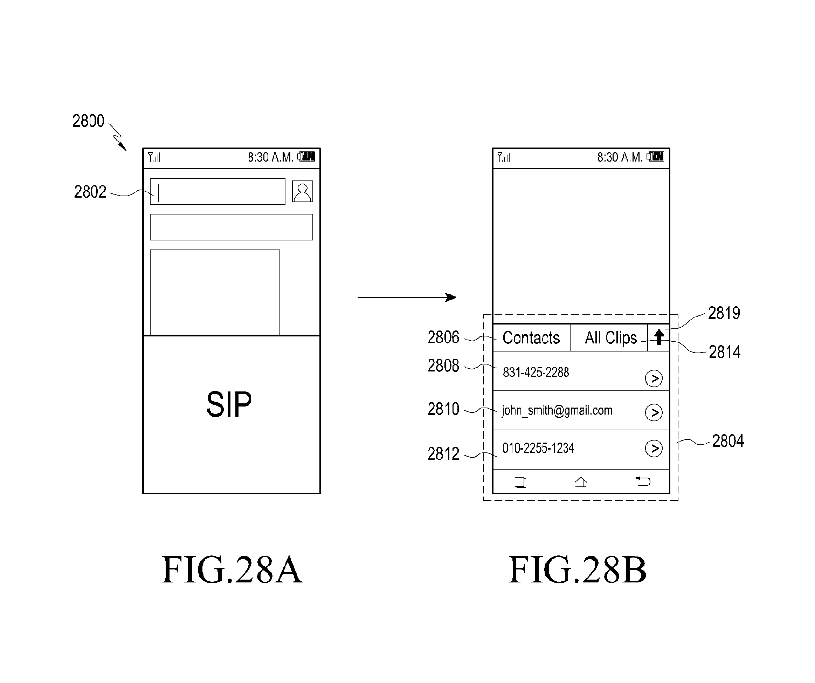

Referring now to FIGs. 28A and 28B, the control unit 110 may detect that the type of an object, which may be input into an input area 2802 displayed on a touch screen 2800, is text. This is because the input area 2802 is an area for inputting a contact. At this time, the control unit 110 may first select objects 2808 to 2812 corresponding to text, and may then display a clipboard list view 2804 for each type. Then, in a case where the control unit has detected that a field of the input area 2802 displayed on the touch screen 2800 is a contact field, when a contact is displayed in text, or when a contact is displayed in an object including text, the control unit may extract only text related to the contact, and may display the extracted text in the clipboard list view 2804 for each type.

At this time, the control unit may display a menu icon 2806 for displaying the clipboard list view 2804 for each type in the clipboard list view, and may display the clipboard list view 2804 for each type when the control unit detects a touch of the menu icon 2806.

On the other hand, when the control unit detects a touch of an icon (All Clips) 2814 for displaying a clipboard list view, the control unit may display the clipboard list view which shows at least one object of all types without discriminating between types. Also, when the control unit detects a touch of a full screen icon 2816 for enlarging the clipboard list view and displaying an enlarged clipboard list view on a full screen, the control unit displays the clipboard list view on the full screen, as shown in FIG. 12.

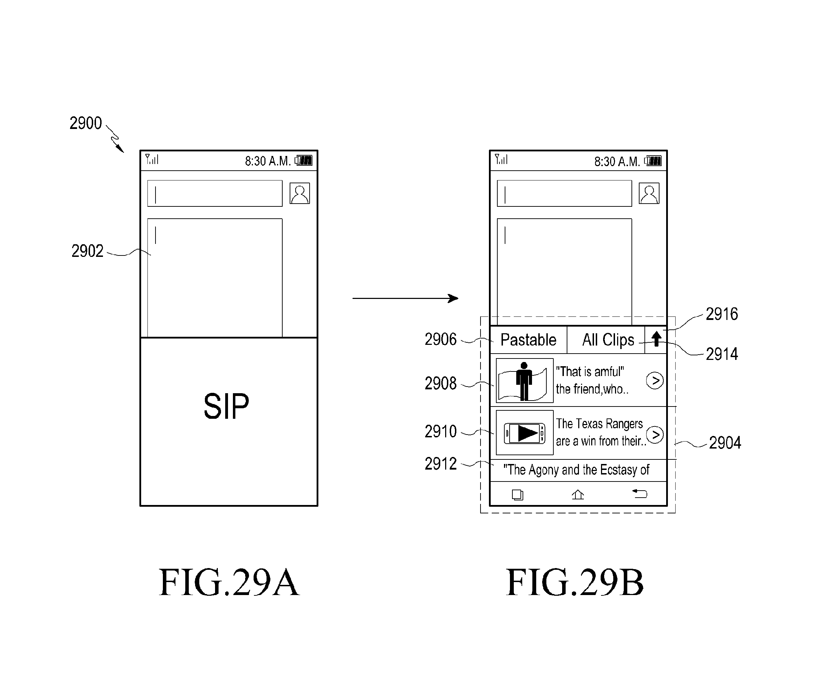

Referring now to FIGs. 29A and 29B, the control unit 110 may detect that the type of an object, which may be input into an input area 2902 displayed on a touch screen 2900, is text. This is because the input area 2902 is an area for inputting a message. At this time, the control unit 110 may first select objects 2908 to 2912 corresponding to text, and may then display a clipboard list view 2904 for each type. Then, when the control unit has detected that a field of the input area 2902 displayed on the touch screen 2900 is a message field, the control unit may extract only text from an object including the text and may display the extracted text in the clipboard list view 2904 for each type, may extract only title information and a link of an image from the image object and may display the extracted title information and link of the image in the clipboard list view 2904 for each type, may extract only title information and a link of an image file from the image file object and may display the extracted title information and link of the image file in the clipboard list view 2904 for each type, and may extract only title information and a link of a music file from the music file object and may display the extracted title information and link of the music file in the clipboard list view 2904 for each type. At this time, the control unit may display a menu icon 2906 for displaying the clipboard list view 2904 for each type in the clipboard list view, and may display the clipboard list view 2904 for each type when the control unit detects a touch of the menu icon 2906. On the other hand, when the control unit detects a touch of an icon (All Clips) 2914 for displaying a clipboard list view, the control unit may display the clipboard list view which shows at least one object of all types without discriminating between types. Also, when the control unit detects a touch of a full screen icon 2916 for enlarging the clipboard list view and displaying an enlarged clipboard list view on a full screen, the control unit displays the clipboard list view on the full screen, as shown in FIG. 12.

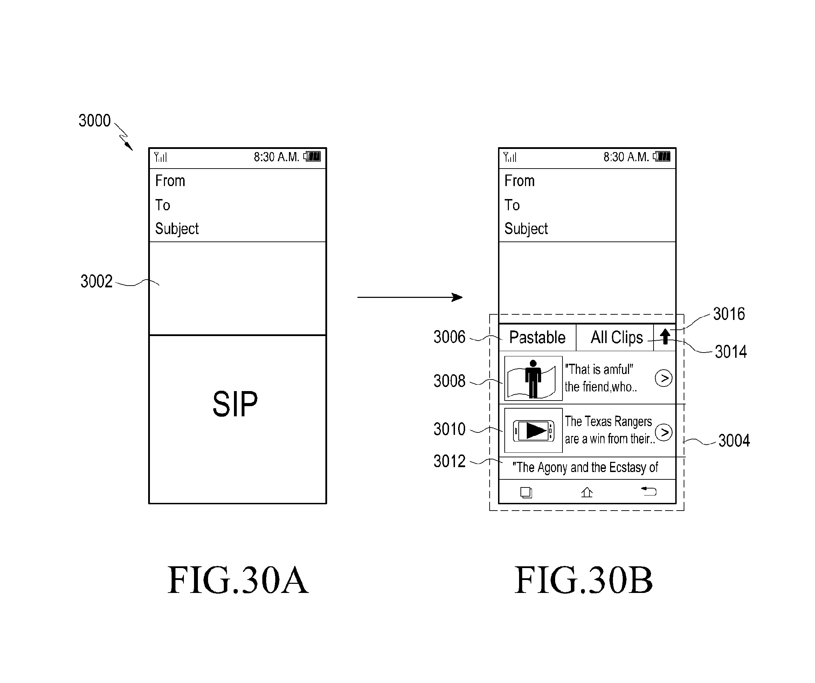

Referring now to FIGs. 30A and 30B, the control unit 110 may detect that the type of an object, which may be input into an input area 3002 displayed on a touch screen 3000, is text and an image. This is because the input area 3002 is an area for inputting an e-mail.

At this time, the control unit 110 may first select objects 3008 to 3012, which correspond to text and an image, and may then display a clipboard list view 3004 for each type. Then, in a case where the control unit has detected that a field of the input area 3002 displayed on the touch screen 3000 is an e-mail field, the control unit may display an object including text together with form information in the clipboard list view 3004 for each type when text and a form are supported, may reduce or enlarge an image of an image object to a size suitable for an e-mail input area and may display a reduced or enlarged image in the clipboard list view 3004 for each type, may extract both a thumbnail image including a first image an image file of an image file object and only title information and a link of the image file and may display the extracted thumbnail image and the extracted title information and the link of the image file in the clipboard list view 3004 for each type, and may extract both an album image or a first image of a music file of a music file object and only title information and a link of the music file and may display the extracted image of the music file and the extracted title information and link thereof in the clipboard list view 3004 for each type.

At this time, the control unit may display a menu icon 3006 for displaying the clipboard list view 3004 for each type in the clipboard list view, and may display the clipboard list view 3004 for each type when the control unit detects a touch of the menu icon 3006. On the other hand, when the control unit detects a touch of an icon (All Clips) 3014 for displaying a clipboard list view, the control unit may display the clipboard list view which shows at least one object of all types without discriminating between types. Also, when the control unit detects a touch of a full screen icon 3016 for enlarging the clipboard list view and displaying an enlarged clipboard list view on a full screen, the control unit displays the clipboard list view on the full screen, as shown in FIG. 12.

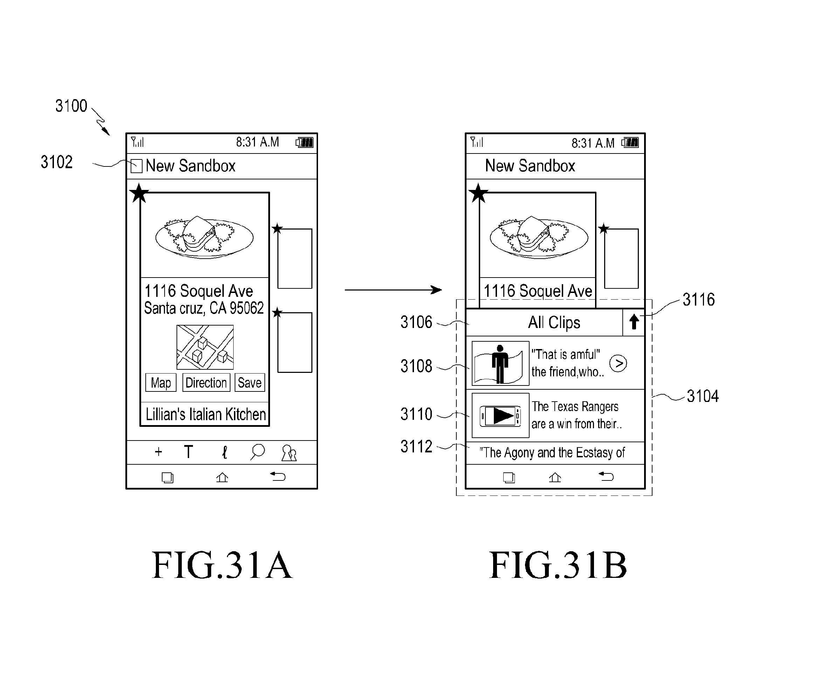

Referring now to FIGs. 31A and 31B, the control unit 110 may detect that the type of an object, which may be input into an input area 3102 displayed on a touch screen 3100, corresponds to all types. This is because the input area 3102 is an area for inputting a cloud service.

At this time, the control unit 110 may display all objects 3108 to 3112 in a clipboard list view 3104. Also, when the control unit detects a touch of a full screen icon 3116 for enlarging the clipboard list view and displaying an enlarged clipboard list view on a full screen, the control unit displays the clipboard list view on the full screen, as shown in FIG. 12.

The method for providing a clipboard function in the mobile device according to yet another exemplary embodiment of the present invention has a feature of providing a cloud service by using at least one object stored in the clipboard storage area.

A cloud service may signify a service capable of transmitting, storing and downloading at least one object, which is stored in the clipboard storage area included in the storage unit of the mobile device, to/in/from a cloud server. First, the cloud service may be a service for transmitting and storing at least one object, which is stored in the clipboard storage area, to/in the cloud server. Namely, the control unit 110 of the mobile device may control the mobile device so as to transmit at least one object, which is stored in the clipboard storage area included in the storage unit 175, to the cloud server by using the communication modules 120, 131 and 132. Then, the cloud server may receive the at least one object through a communication module included in the cloud server, and may store the received at least one object in a storage unit included in the cloud server. Then, the mobile device may detect a user's command for calling at least one clipped object, and may transmit a command for calling the at least one object to the cloud server through the communication modules 120, 131 and 132. At this time, the cloud server may receive the call command through the communication module, may detect at least one object, which is included in the call command, from the storage unit, and may transmit the at least one object to the mobile device through the communication module. Then, the mobile device may receive the called object through the communication module, and may store the called object in the clipboard storage area or may display the called object on the screen.

Also, in a case where the control unit of the mobile device transmits at least one object stored in the clipboard storage area to the cloud server, when original data of the object exists in the Internet or in the cloud server, the control unit may transmit only a link of the object to the cloud server. The link may be a link address on the Internet of the original data of the object, or a link address of the cloud server where the object exists. Accordingly, even when the control unit transmits only the link to the cloud server, the cloud server may search for the object on the Internet by using the link, and may store the found object. Otherwise, the cloud server may search for the object in the storage unit of the cloud server by using the link address of the cloud server, and may find the object.

Also, when the mobile device sends a request for a clipped object to the cloud server, the clipboard server may set an access right to the clipped object. Accordingly, when the cloud server receives a call command for calling the object from the mobile device of the user who has no access right, the cloud server may reject the transmission of the object.

Also, when the cloud server stores at least one object in excess of a preset storage capacity, the cloud server may transmit a message reporting an excess of the preset storage capacity to the mobile device through the communication module. At this time, the mobile device may receive the message, and may display, on the screen, content such that the cloud server has exceeded the preset storage capacity. Also, when the mobile device transmits the at least one object to the cloud server, the mobile device may display the amount of data transmission related to the object on the screen, and may allow the user to recognize the amount of data transmission.

Then, when the cloud server receives at least one clipped object from the mobile device in excess of the preset storage capacity, the cloud server may automatically delete at least one object stored in the storage unit of the cloud server, in order from an object which has been stored in the storage unit thereof for a long time. Accordingly, the present invention has an advantage in that the cloud server can store an object without exceeding the storage capacity.

The above-described methods according to the present invention can be implemented in hardware, firmware or as software or computer code that is stored on a non-transitory machine readable medium such as a CD ROM, a RAM, a floppy disk, a hard disk, or a magneto-optical disk or computer code downloaded over a network originally stored on a remote recording medium or a non-transitory machine readable medium and stored on a local non-transitory recording medium, so that the methods described herein can be loaded into hardware such as a general purpose computer, or a special processor or in programmable or dedicated hardware, such as an ASIC or FPGA. As would be understood in the art, the computer, the processor, microprocessor controller or the programmable hardware include memory components, e.g., RAM, ROM, CD, DVD, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein. In addition, an artisan understands and appreciates that a "processor" or "microprocessor" constitute hardware in the claimed invention. Under the broadest reasonable interpretation, the appended claims constitute statutory subject matter in compliance with 35 U.S.C. §101.

The terms "unit" or "module" as used herein is to be understood as constituting hardware such as a processor or microprocessor configured for a certain desired functionality in accordance with statutory subject matter under 35 U.S.C. §101 and does not constitute software per se.

It will be appreciated particularly with regard to a method that the exemplary embodiments of the present invention in all instances does not constitute software per se, and the implementation includes hardware, or a combination of hardware and machine executable code which is loaded into hardware such as a microprocessor which is configured for the described functionality. Any such machine readable code may be stored in a volatile or non-volatile storage device such as a ROM (Read-Only Memory), or in a memory such as a RAM (Random Access Memory), a memory chip, a memory device or a memory integrated circuit, or in a storage medium, such as a CD (Compact Disc), a DVD (Digital Versatile Disc), a magnetic disk or a magnetic tape, which is optically or magnetically recordable and simultaneously, is readable by a machine (for example, a computer), regardless of whether the software can be deleted or rewritten.

Also, the mobile device may receive the program from an apparatus for providing a program, which is connected by wire or wirelessly, and may store the received program. The apparatus for providing a program may include a program including directions which cause the exemplary embodiments of the present invention to be performed, a storage unit for storing the exemplary embodiments of the present invention, a communication unit for performing wired or wireless communication with the mobile device, and a control unit for transmitting a relevant program, by a request of the mobile device or automatically, to the transmission/reception device.

According to an exemplary embodiment of the present invention, there is an advantage of providing the clipboard mode in which the user's gesture may be sensed and the sensed user's gesture may be used in the mobile device.

Also, according to an exemplary embodiment of the present invention, there is an advantage in that user does not have to search for an object which may be clipped.

Also, according to an exemplary embodiment of the present invention, there is an advantage in that an identifier is automatically displayed for an object, which may be clipped, and the user can see the object, which may be clipped, at a glance. In addition, it is within the spirit and scope of the invention that the clipping can including cutting and pasting in addition to copying and pasting, based on the particular selection made.

Also, according to an exemplary embodiment of the present invention, there is an advantage in that the user can clip an object desired by the user only by touching the screen.

Further, according to still another exemplary embodiment of the present invention, there is an advantage in that the list view activation event enables the display of the clipboard list view on the screen of the mobile device.

While the invention has been shown and described with reference to certain exemplary embodiments thereof, it will be understood by those skilled in the art that various changes in form and details may be made therein without departing from the spirit and scope of the present invention. Therefore, the spirit and scope of the present invention is not limited to the described exemplary embodiments thereof, but is defined by the appended claims and equivalents thereof.

## Claims

1. A method for providing a clipboard function in a mobile device, the method comprising:
detecting by a control unit (110) whether a clipboard mode entry event for entering a clipboard mode has occurred (S301);
searching for at least one object to be clipped on a touch screen displaying a screen of the mobile device, when the clipboard mode entry event has occurred (S304); and
displaying by a display unit (190) at least one clip identifier matched with the at least one found object on the touch screen of the mobile device (S306).

2. The method as claimed in claim 1, further comprising:
detecting by a touch of the at least one clip identifier (S308, S508); and
storing the at least one found object matched with the at least one clip identifier, the touch of which is detected, in a clipboard storage area (175, S310, S514) when the touch of the at least one clip identifier is detected.

3. The method as claimed in claim 1, further comprising:
detecting a touch of the at least one clip identifier (S308, S508);
displaying a clip done identifier on the touch screen when the touch of the at least one clip identifier is detected (S510) to indicate to the control unit to store the at least one object identified by a position of the at least one clip identifier;
detecting a touch of the clip done identifier (S512); and
completing a clip process and storing the at least one object matched with the at least one clip identifier, the touch of which is detected, in a clipboard storage area (175), when the touch of the clip done identifier is detected (S514).

4. The method as claimed in claim 1, **characterized in that** the clip identifier corresponds to a guide area surrounding the at least one object (702), and the guide area (704) is variable in size so as to guide a partial area (706) of the at least one object, or the clip identifier corresponds to a first guide area (802) surrounding the at least one first object and the first guide area is enlarged to include a third guide area (806) including the first object and a second guide (803) area surrounding another second object (805).

5. The method as claimed in claim 2, **characterized in that** when the at least one object is stored in the clipboard storage area (175), additional information is collected from the at least one object via an icon of the at least one object, and the additional information is stored together with the at least one object in the clipboard storage area.

6. The method as claimed in claim 2, further comprising:
detecting by the control unit (110) whether a list view activation event for activating a clipboard list view (S 1012) has occurred; and
displaying by the display unit (190) the clipboard list view (S1014), which displays the at least one object stored in the clipboard storage area, on the touch screen when the list view activation event has occurred.

7. The method as claimed in claim 6, further comprising:
detecting a touch of the at least one object displayed in the clipboard list view (S2316); and
copying or pasting (S2318) the at least one object into an input area displayed on the touch screen, when the touch is detected.

8. The method as claimed in claim 6, **characterized in that** the clipboard list view further comprises a clipboard list view (1200) for each type, which displays only at least one object of a type to be input into an input area, after the at least one object is selected from among one or more objects stored in the clipboard storage area (175).

9. A mobile device having a clipboard function, the mobile device comprising:
a touch screen for displaying a screen (200) of the mobile device (100); and
a control unit (110) for detecting whether a clipboard mode entry event for entering a clipboard mode has occurred (203, S301), searching for at least one object to be clipped (S304) on the touch screen displaying the screen (200) of the mobile device (100) when the clipboard mode entry event has occurred, and displaying at least one clip identifier (S308) matched with the at least one found object on the touch screen of the mobile device (100).

10. The mobile device as claimed in claim 9, **characterized in that** the control unit detects a touch of the at least one clip identifier (S308), and stores at least one object matched with at least one clip identifier (S310), the touch of which is detected, in a clipboard storage area included in a storage unit (175), when the touch is detected.

11. The mobile device as claimed in claim 9, **characterized in that** the control unit detects a touch of the at least one clip identifier, displays a clip done identifier (S508) on the touch screen when the touch of the at least one clip identifier is detected, detects a touch of the clip done identifier (S512), and completes a clip process and stores at least one object matched with the at least one clip identifier, the touch of which is detected, in a clipboard storage area (S514), when the touch of the clip done identifier is detected.

12. The mobile device as claimed in claim 9, **characterized in that** the clip identifier corresponds to a guide area (704) surrounding the at least one object and the guide area (704) is variable in size so as to guide a partial area (706) of the at least one object, or the clip identifier corresponds to a first guide area (802) surrounding the at least one first object and the first guide area is enlarged to a from a third guide area including the first object and a second guide area surrounding another second object.

13. The mobile device as claimed in claim 10, **characterized in that** when the at least one object is stored in the clipboard storage area, additional information (2104) is collected by using the at least one object, and the additional information is stored together with the at least one object in the clipboard storage area.

14. The mobile device as claimed in claim 10, **characterized in that** the control unit detects whether or not a list view activation event for activating a clipboard list view has occurred, and displays the clipboard list view (2102, S2314), which displays the at least one object stored in the clipboard storage area, on the touch screen when the list view activation event has occurred.

15. The mobile device as claimed in claim 14, **characterized in that** the clipboard list view (2102) further comprises a clipboard list view for each type, which displays only at least one object of a type to be input into an input area, after the at least one object is selected from among one or more objects stored in the clipboard storage area (175).
